(19) Europäisches Patentamt
European Patent Office
Office européen des brevets

(11) **EP 4 042 270 B1**

(12) **EUROPEAN PATENT SPECIFICATION**

(45) Date of publication and mention
of the grant of the patent:
**19.03.2025 Bulletin 2025/12**

(21) Application number: **20793109.8**

(22) Date of filing: **13.10.2020**

(51) International Patent Classification (IPC):
**G06F 7/48** $^{(2006.01)}$       **G06F 7/544** $^{(2006.01)}$

(52) Cooperative Patent Classification (CPC):
**G06F 7/5446; G06F 7/4818; G06F 7/556**

(86) International application number:
**PCT/GB2020/052544**

(87) International publication number:
**WO 2021/074602 (22.04.2021 Gazette 2021/16)**

(54) **HARDWARE ALGORITHM FOR COMPLEX-VALUED EXPONENTIATION AND LOGARITHM USING SIMPLIFIED SUB-STEPS**

**HARDWARE-ALGORITHMUS ZUR KOMPLEXWERTIGEN POTENZIERUNG UND LOGARITHMUS, DER VEREINFACHTE UNTERSCHRITTE VERWENDET**

**ALGORITHME MATÉRIEL POUR LE CALCUL D'EXPONENTIELLES ET DE LOGARITHMES À VALEURS COMPLEXES UTILISANT DES SOUS-ÉTAPES SIMPLIFIÉES**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2019 US 201962914498 P**

(43) Date of publication of application:
**17.08.2022 Bulletin 2022/33**

(73) Proprietor: **Ultraleap Limited**
**Bristol**
**BS2 OEL (GB)**

(72) Inventor: **LONG, Benjamin John Oliver**
**Bristol BS4 3AS (GB)**

(74) Representative: **Latham, Stuart Alexander**
**Withers & Rogers LLP**
**2 London Bridge**
**London SE1 9RA (GB)**

(56) References cited:
• BAJARD J-C ET AL: "BKM: A NEW HARDWARE ALGORITHM FOR COMPLEX ELEMENTARY FUNCTIONS", IEEE TRANSACTIONS ON COMPUTERS, IEEE, USA, vol. 43, no. 8, 1 August 1994 (1994-08-01), pages 955 - 963, XP000457355, ISSN: 0018-9340, DOI: 10.1109/ 12.295857
• JEAN-CLAUDE BAJARD ET AL: "Evaluation of complex elementary functions: a new version of BKM", PROCEEDINGS OF SPIE, vol. 3807, 2 November 1999 (1999-11-02), 1000 20th St. Bellingham WA 98225-6705 USA, pages 2 - 9, XP055756288, ISSN: 0277-786X, ISBN: 978-1-5106-3927-0, DOI: 10.1117/12.367631

**Description**

FIELD OF THE DISCLOSURE

The present disclosure relates generally to developing and applying hardware algorithms for complex-valued exponentiation and logarithm using simplified sub-steps.

BACKGROUND

The BKM algorithm is a shift-and-add algorithm for computing elementary functions, first published in 1994 by Jean-Claude Bajard, Sylvanus Kla, and Jean-Michel Muller. BKM is based on computing complex logarithms (L-mode) and exponentials (E-mode) using a method similar to the algorithm Henry Briggs used to compute logarithms. By using a precomputed table of logarithms of negative powers of two, the BKM algorithm computes elementary functions using only integer add, shift, and compare operations.

BKM is similar to CORDIC but uses a table of logarithms rather than a table of arctangents. On each iteration, a choice of coefficient is made from a set of nine complex numbers, 1, 0, -1, i, -i, 1+i, 1-i, -1+i, -1-i, rather than only -1 or +1 as used by CORDIC. BKM provides a simpler method of computing some elementary functions, and unlike CORDIC, BKM needs no result scaling factor. The convergence rate of BKM is approximately one bit per iteration, like CORDIC, but BKM requires more precomputed table elements for the same precision because the table stores logarithms of complex operands.

As with other algorithms in the shift-and-add class, BKM is particularly well-suited to hardware implementation. The relative performance of software BKM implementation in comparison to other methods such as polynomial or rational approximations will depend on the availability of fast multi-bit shifts (i.e. a barrel shifter) or hardware floating point arithmetic.

Previously disclosed was an approach to recast the complex exponentiation and logarithm problem from the classical manipulation r + iθ ↔ e^{r+iθ} using the BKM algorithm, to the manipulation $r + i\theta \leftrightarrow 2^r \left(e^{\pi/2}\right)^{i\theta}$ using a revised algorithm which shall be referred to as the BKML algorithm. This revised BKML algorithm takes the form of two algorithms, each the reverse of the other, one to compute:

$$f(r + i\theta) = 2^r \left(e^{\pi/2}\right)^{i\theta},$$

as well as its inverse:

$$f^{-1}(r + i\theta) = \frac{\arg(r + i\theta)}{\pi/2} i + \log_2 |r + i\theta|,$$

wherein the real part of the logarithm has a base of 2 and the imaginary part has a base of $e^{\pi/2}$.

With some modifications, this can apply to any power-of-two base for the real part, and any power-of-two multiplied by pi and exponentiated for the base of the imaginary part. As the real and imaginary part of the process has a different base, the mathematical part of the process described that was implemented was novel and was not named initially. In this document, it shall be described and claimed as an 'affine logarithm' or 'affine exponential'. The process shall be described as an 'affine logarithm process' or 'exponential-to-logarithm process' and an 'affine exponential process' or 'logarithm-to-exponential process' interchangeably. This is proceeded by a series of $n$ steps choosing a value $d_n$ for each in turn, where:

$$d_n \in \{0, +1, +i, -1, +i, -1 - i, -1 + i, +1 - i, +1 + i\},$$

and on the first of the complex values, we multiply by:

$$1 + 2^{-n} d_n,$$

and use the logarithm of this value precomputed in a table to attenuate the second complex value.

Through repeated choices of $d_n$ over $n$ iterations, the iteration causes the first value to converge to the exponential and the second value converge to zero. The reverse operation is also possible using much the same process allowing for much the same hardware to be run in a logarithm or exponentiation 'mode'. Without loss of generality, due to the structure of the set from which $d_n$ is chosen, the storage cost of table is the number of bits to compute, say $N$, multiplied by the number of symmetries (usually the total number of non-zero choices of $d_n$) here eight (if the existing algorithm is expanded fully, this is five real lookups and three imaginary ones). This is a lookup size of $8N$ over each of $N$ stages, yielding $8N^2$ bits dedicated to lookup tables when an implementation of the BKML algorithm is used.

A further reason that the use of the prior art BKM algorithm is not well known and in widespread use is because the tabulated values take up a large amount of room in a silicon implementation that could be dedicated to other tasks. This is a weakness shared by the BKML implementation of the revised algorithm computing $r + i\theta \leftrightarrow 2^r \left( e^{\pi/2} \right)^{i\theta}$ disclosed previously.

While it is difficult to determine precisely, it is quite possible that if eight lookup tables are necessary, computing the real and imaginary parts of the logarithm separately without using the combined iteration demonstrated by the BKM algorithm and the previously disclosed BKML algorithm will in many cases be more efficient with respect to hardware logic complexity and area - a drawback shared by the original BKM algorithm.

The requirement for eight lookup tables is considered to be due to the difficulty in achieving convergence in its classical $r + i\theta \leftrightarrow e^{r+i\theta}$ form when the BKM algorithm was conceived by its authors. However, it is shown that with the change of base actioned when the BKML algorithm was invented previously, a new algorithm may be created that can overcome the need for eight look-up tables by requiring less stringent convergence criteria and therefore may be defined to need fewer resources.

In practice, in the process of looking for a form of the algorithm that requires fewer look-up tables, methods were found that may be applied even to the BKM algorithm.

SUMMARY

A method of generating complex exponentiation and logarithms in hardware is described that uses half the number of bits of lookup tables as the state-of-the-art. By splitting up each of the iterations into more simplified stages or using more iterations, the amount of precomputed information that must be held by the circuitry is reduced. This allows synthesis tools to take this more succinct logical description of the algorithm and make it into efficient gate level logic for fabrication into more compact integrated circuitry.

BRIEF DESCRIPTION OF THE DRAWINGS

The accompanying figures, where like reference numerals refer to identical or functionally similar elements throughout the separate views, together with the detailed description below, are incorporated in and form part of the specification, serve to further illustrate embodiments of concepts that include the claimed invention and explain various principles and advantages of those embodiments.

Figures 1A and 1B show illustration of errors in the complex plane in the logarithm-to-exponential process (floating-point implementation) for the BKML4m iteration.

Figures 2A and 2B show illustrations of errors in the complex plane in the exponential-to-logarithm process (floating-point implementation) for the BKML4m process.

Figures 3A and 3B show illustrations of errors in the complex plane in the logarithm-to-exponential process (floating-point implementation) for the BKML3dm iteration prior to the inclusion of the reduced entropy tables.

Figures 4A and 4B show illustration of errors in the complex plane in the exponential-to-logarithm process (floating-point implementation) for the BKML3dm prior to the inclusion of the reduced entropy tables.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

DETAILED DESCRIPTION

This disclosure describes the orthogonalization of the sub-steps in real and imaginary parts to achieve a reduction in the number of lookup tables required for the algorithm and simplifications in the iterative procedure. Applying the orthogonalization to the previously disclosed BKML algorithm results in two algorithms. The first algorithm is more effective when low radix methods are considered, so when throughput and area are prioritized over latency (suitable for implementation in FPGA technologies). The second algorithm is more effective when high radix methods are considered, so when throughput and latency are prioritized over area (suitable for implementation into an application-specific integrated circuit (ASIC) or as an extended capability for a central processing unit (CPU) design).

The first, denoted BKML4m, requires four lookup values (which with some rewiring may be reduced to effectively three-and-a-half) per bit of result and chooses $d_n$ in a similar way to BKML from nine candidates but with notable changes in the candidate set of $d_n$ drawn from. The BKML4m algorithm requires no extra iterations over the extant previously disclosed BKML algorithm, requiring $N$ radix-2 iterations to converge.

The second, denoted BKML3dm, requires three lookup values per bit of result, has a simplified method for choosing $d_n$ from four candidates, essentially eliminating zero and on-axis $d_n$ choices. BKML3dm requires some extra iterations to achieve convergence, taking approximately $N + log\ N$ radix-2 iterations to converge. These extra steps are a problem at low radices, but the simplified choice mechanisms and reduced candidate pool means that this technique may be readily extended to very high radices, necessary for designing high-speed modern hardware. This is especially true since dealing with propagation delays makes arithmetic that need only be synchronized and resolved at key points in the algorithm valuable. Due to this, decision making based on fully resolved result values must be minimized, meaning that when this process generates multiple bits of result per decision step (has high radix) it is particularly effective at reducing latencies.

The value $N$ takes is for brevity both the number of fraction bits and the number iterations of the method, without loss of generality. While these two properties can take different values, algorithms including such definitions are often of reduced effectiveness, involve trivial changes to the method and are thus are effectively included in the scope of this disclosure.

I. Optional multiplication and division

The exponentiation mode iteration for the method described may also be modified to provide a complex multiplication with the exponential value. If this is to be achieved, this must be pre-loaded before the range reduction steps if the output is to be correct. It should also be noted that this would replace the output exponentiation value and so should be not used if this value is required. It is also feasible to store and wait to apply the solution from the integer parts of the logarithm (the value $z_{integer,\ output}$) to the end of the process. This may reduce the storage required for the intermediate registers in which the processing occurs, although this should be weighed against the extra requirements of storage needed for the integer parts of the solution.

Alternatively, multiplication with the final exponentiation value may be achieved in parallel by creating extra registers and ensuring that equivalent operations occur in these extra registers. In this way, the exponentiation process may complex multiply the output exponential value with almost arbitrarily many other complex values with parallel hardware.

The logarithm mode iteration described may also be modified to provide a complex division with the input value. If this is to be achieved, it can only occur in parallel by creating extra registers and ensuring that equivalent operations occur in these extra registers. This contrasts with the auxiliary multiplication, where the original register could be overloaded, which cannot be achieved here because the modification of the exponentiation register in this mode would prevent convergence of the algorithm. However, using auxiliary registers can circumvent this, allowing the logarithm process to, if desired, produce complex-valued division of almost arbitrarily many other numerator complex values with the value input to this process as denominator.

II. Range reduction

More efficient range reduction was one of the primary motivations for the previously disclosed BKML algorithm. This is preserved as an integral part of the algorithm in the presented reduced resource version in this disclosure. In the logarithm-to-exponential iteration, the integer real part of the logarithm input denotes the bit shift applied to either the output registers at the end of the process or initialization of the output registers to a power-of-two at the beginning of the process. The integer imaginary part of the input logarithm, due to the base of $e^{\pi/2}$, denotes the quadrant (aligned to the axes) of the complex plane in which the resulting exponentiation result must lie. In the exponential-to-logarithm process the reverse is mostly true. The quadrant (aligned to the diagonals) of the complex plane is determined through testing the sign bits and absolute value of the real and imaginary components to give the integer part of the imaginary logarithm. By permuting signs of the real and imaginary parts and potentially swapping them, this rotation can be removed to yield a real part that is guaranteed to be positive and larger than the imaginary part. Counting leading zeroes of this real and larger part allows the integer part of the logarithm to be substantially determined. This substantial determination may be removed by bit shifting both components, such that the remaining portion of the real logarithm may be obtained via the iteration.

It may also be desirable to keep the integer portion determined by the range reduction step separate from the calculation for as long as possible. This allows the method to perform complex logarithm to floating-point complex exponential conversions that are highly useful in the context of wave physics applications. To achieve a true conversion to a standard floating-point type, the fractional part of the exponentiation may be tested to determine whether the result is too large or small for the mantissa to fit into a particular format, depending on the region of convergence decided upon by the reduced range algorithm. This is necessary because only the larger real part is tested to determine whether the value lies within the convergent region of the complex plane and the size of imaginary part is untested at this time but must be in a known range of values. A final test on the real part of the exponential mantissa and an increment or decrement on the exponential integer exponent then finalizes the representation ready for storage into the floating-point format. In the implementation described here, the complex value may be up to $\sqrt{2}$ in size (thus in the interval $[0.5, \sqrt{2})$), which would if greater or equal to 1 require a divide-by-two and exponent increment to place into the region [0.5, 1) in which the integer part of the exponent is completely described by the exponent of the floating-point value.

III. <u>Multiplicative iterations in the complex plane</u>

Noticing that each iteration requires that we multiply the running product by:

$$1 + 2^{-n}d_n,$$

if we choose the real part of $d_n$ separately from the imaginary part we can choose:

$$d_{n,\Re} \in \{0, -1, +1\},$$

$$d_{n,\Im} \in \{0, -i, +i\}.$$

The iteration may be modified to perform the running product multiplied by the further product:

$$\left(1 + 2^{-n}d_{n,\Re}\right)\left(1 + 2^{-n}d_{n,\Im}\right) = 1 + 2^{-n}\left(d_{n,\Re} + d_{n,\Im}\right) + 2^{-2n}d_{n,\Re}d_{n,\Im},$$

$$= 1 + 2^{-n}\left(d_{n,\Re} + d_{n,\Im} + 2^{-n}d_{n,\Re}d_{n,\Im}\right),$$

on each iteration. As a result, the diagonal $d_n$ which have both a real and an imaginary part have an extra factor of $2^{-2n}d_{n,\Re}d_{n,\Im}$ which results in an extra shift (by 2$n$ bit places) and add requirement for these schemes in the exponential part and a potential extra subtraction in the logarithm part. As using this scheme allows the number of lookup tables to be reduced from eight to four in the worst case, the extra shift and add requirement is more than compensated for as the four extra tables can be dropped as will be demonstrated.

IV. <u>The BKML4m variant</u>

Using $d_n$ as highlighted in the previous section but keeping the structure of the algorithm mostly the same leads us to a similar algorithm to that disclosed previously but with a slightly different choice of $d_n$ due to the cross terms. This can be written out as an effectively expanded table for a general $d_n$:

$$d_n \in \left\{ \begin{array}{c} 0, \\ -1, \\ +1, \\ -i, \\ +i, \\ -1-i+2^{-n}i, \\ -1+i-2^{-n}i, \\ +1+i+2^{-n}i, \\ +1-i-2^{-n}i, \end{array} \right\},$$

Since the extra $2^{-n}$ terms in $d_n$ are $n$ bit places away from the bit currently under scrutiny at any given time, while these extra terms need to be accounted for, they only negligibly affect the convergence of the method. For the most part, this then converges in almost the same way as the original revised method in previous disclosures (although the previous method would necessarily have the disadvantage of requiring eight lookup tables). The changes to the choice of $d_n$ amount to an extra shift-and-add in the product of the exponentials and an extra addition in the summation of the logarithms per iteration.

V. <u>Table lookup construction</u>

When considering the logarithm portion of each iterative method (both logarithm-to-exponential and exponential-to-logarithm), it can be shown that only four lookup tables containing the bit patterns of the logarithms need be constructed. These are:

$$l_{n,\Re+} = \log_2|1 + 2^{-n}|,$$
$$l_{n,\Re-} = \log_2|1 - 2^{-n}|,$$
$$l_{n,\Re d} = \log_2|1 \pm 2^{-n}i| = \log_2\sqrt{1^2 + (\pm 2^{-n})^2} = \frac{1}{2}\log_2(1 + 2^{-2n}),$$
$$l_{n,\Im} = \frac{2}{\pi}\arg|1 + 2^{-n}i| = \frac{2}{\pi}\tan^{-1} 2^{-n},$$

Of these four, it is also possible to reduce it to effectively three and a half via the observation:

$$l_{n,\Re d} = \frac{1}{2}l_{2n,\Re+},$$

where the preceding factor of a half may be a bit shift. By reusing table entries for $l_{n,\Re+}$ and extending to $l_{2n,\Re+}$ only for even values (or producing a table of $l_{n,\Re d}$ only for even values after the other table has been exhausted) the remainder may be filled by using only half a table.

Then the logarithms to use for the addition/subtraction portion will be:

$$\log_{\mathcal{A}}(1) = 0,$$

$$\log_{\mathcal{A}}(1 - 2^{-n}) = l_{n,\Re-},$$

$$\log_{\mathcal{A}}(1 + 2^{-n}) = l_{n,\Re+},$$

$$\log_{\mathcal{A}}(1 - 2^{-n}i) = l_{n,\Re d} - l_{n,\Im}i,$$

$$\log_{\mathcal{A}}(1 + 2^{-n}i) = l_{n,\Re d} + l_{n,\Im}i,$$

$$\log_{\mathcal{A}}\big((1 - 2^{-n})(1 - 2^{-n}i)\big) = l_{n,\Re-} + l_{n,\Re d} - l_{n,\Im}i,$$

$$\log_{\mathcal{A}}\big((1 + 2^{-n})(1 - 2^{-n}i)\big) = l_{n,\Re+} + l_{n,\Re d} - l_{n,\Im}i,$$

$$\log_{\mathcal{A}}\big((1 - 2^{-n})(1 + 2^{-n}i)\big) = l_{n,\Re-} + l_{n,\Re d} + l_{n,\Im}i,$$

$$\log_{\mathcal{A}}\big((1 + 2^{-n})(1 + 2^{-n}i)\big) = l_{n,\Re+} + l_{n,\Re d} + l_{n,\Im}i,$$

These are then added to the running total of the logarithm upon whose upper bits the decision as to the direction to take is chosen for the next iteration.

VI. <u>BKML4m: Exponentiation mode iteration</u>

With the mechanism using four look-up tables established, the method to achieve complex exponentiation using this approach can be described. The method and region cut-offs for choosing each $d_n$ from the input are very similar to the revised algorithm which required eight look-up tables in the BKML algorithm disclosed prior to this. This allows the method to not require extra iterations to be inserted, because the only difference in the convergence between the previous revised algorithm and this is the extra $2^{-2n}d_{n,\Re}d_{n,\Im}$ term, which has much less effect than the other terms in the expansion of the multiplication step.

Alternatively, multiplication with the final exponentiation value may be achieved in parallel by creating extra registers and ensuring that equivalent operations occur in these extra registers, as described in previous sections. In this way, the exponentiation process may complex multiply the output exponential value with almost arbitrarily many other complex values.

Assuming the fractional part of the input logarithms to be the input, the algorithm for the domain of convergence $z_{\text{input}} \in R = [-0.5, +0.5) + i[-0.5, +0.5)$ is:

1. Assuming there are four basic registers, labelled $\Re(z_{\log})$, $\Im(z_{\log})$, $\Re(z_{\exp})$ and $\Im(z_{\exp})$. Alongside, there are two extra slave multiplication registers $\Re'(z_{\exp})$ and $\Im'(z_{\exp})$ to demonstrate how the method operates when used for auxiliary complex multiplication. The initial values of these registers are:

$$\Re(z_{\log}) \coloneqq \Re(z_{\text{input}}),$$

$$\Im(z_{\log}) \coloneqq \Im(z_{\text{input}}),$$

$$\Re(z_{\exp}) \coloneqq \Re(z_{\text{integer input, output}} \times z_{\text{premultiply}}),$$

$$\Im(z_{\exp}) \coloneqq \Im(z_{\text{integer input, output}} \times z_{\text{premultiply}}),$$

where $z_{\text{premultiply}} \coloneqq 1.0$, if there are no requirements for pre-multiplication. The slave multiplication registers may also be similarly constructed with:

$$\Re(z'_{\exp}) \coloneqq \Re(z_{\text{integer input, output}} \times z'_{\text{premultiply}}),$$

$$\Im\left(z'_{\text{exp}}\right) := \Im\left(z_{\text{integer input, output}} \times z'_{\text{premultiply}}\right).$$

2. Iterate through the values $1, \cdots, N-1$ as the index $n$:

3. Shift right by $N - n$ and then truncate $\Re\left(z_{\log}\right)$ to form $\Re\left(z_{\log,\,\text{test}}\right)$ such that it has three bits; one sign bit and two integer bits in two's complement such that the range is [-4.0, +4.0) with the smallest change being 1. The multiplication of this value by $2^{-n}$ is implied by the initial shift.

4. Shift right by $N - (n + 1)$ and then truncate $\Im\left(z_{\log}\right)$ to form $\Im\left(z_{\log,\,\text{test}}\right)$ such that it has three bits; one sign bit, one integer bit and one fraction bit in two's complement such that the range is [-2.0, +2.0) with the smallest change being 0.5. The multiplication of this value by $2^{-n}$ is implied by the initial shift.

5. Test the 3-bit values to determine $d_n$:

$$\Re(d_n) := \begin{cases} -1, & \text{if } \Re\left(z_{\log,\,\text{test}}\right) < 3'\text{sb111 (or} < -1.0), \\ +1, & \text{if } \Re\left(z_{\log,\,\text{test}}\right) > 3'\text{sb000 (or} \geq +1.0), \\ \quad 0, & \text{if neither,} \end{cases}$$

$$\Im(d_n) := \begin{cases} -i, & \text{if } \Im\left(z_{\log,\,\text{test}}\right) < 3'\text{sb111 (or} < -0.5), \\ +i, & \text{if } \Im\left(z_{\log,\,\text{test}}\right) > 3'\text{sb000 (or} \geq +0.5), \\ \quad 0, & \text{if neither.} \end{cases}$$

6. Apply the shift-and-add process effecting the multiplication of the $2^{-n}$ terms to the exponential registers:

$$\Re\left(z_{\text{exp, n}}\right) := \Re\left(z_{\text{exp, n-1}}\right) +$$

$$+ \begin{cases} -2^{-n}\Re\left(z_{\text{exp, n-1}}\right) = -\text{sra}\left(\Re\left(z_{\text{exp, n-1}}\right), n\right), & \text{if } \Re(d_n) = -1, \\ +2^{-n}\Re\left(z_{\text{exp, n-1}}\right) = +\text{sra}\left(\Re\left(z_{\text{exp, n-1}}\right), n\right), & \text{if } \Re(d_n) = +1, \\ \qquad\qquad 0, & \text{if neither,} \end{cases}$$

$$+ \begin{cases} +2^{-n}\Im\left(z_{\text{exp, n-1}}\right) = +\text{sra}\left(\Im\left(z_{\text{exp, n-1}}\right), n\right), & \text{if } \Im(d_n) = -i, \\ -2^{-n}\Im\left(z_{\text{exp, n-1}}\right) = -\text{sra}\left(\Im\left(z_{\text{exp, n-1}}\right), n\right), & \text{if } \Im(d_n) = +i, \\ \qquad\qquad 0, & \text{if neither.} \end{cases}$$

And:

$$\Im\left(z_{\text{exp, n}}\right) := \Im\left(z_{\text{exp, n-1}}\right) +$$

$$+ \begin{cases} -2^{-n}\Im\left(z_{\text{exp, n-1}}\right) = -\text{sra}\left(\Im\left(z_{\text{exp, n-1}}\right), n\right), & \text{if } \Re(d_n) = -1, \\ +2^{-n}\Im\left(z_{\text{exp, n-1}}\right) = +\text{sra}\left(\Im\left(z_{\text{exp, n-1}}\right), n\right), & \text{if } \Re(d_n) = +1, \\ \qquad\qquad 0, & \text{if neither,} \end{cases}$$

$$+ \begin{cases} -2^{-n}\Re\left(z_{\text{exp, n-1}}\right) = -\text{sra}\left(\Re\left(z_{\text{exp, n-1}}\right), n\right), & \text{if } \Im(d_n) = -i, \\ +2^{-n}\Re\left(z_{\text{exp, n-1}}\right) = +\text{sra}\left(\Re\left(z_{\text{exp, n-1}}\right), n\right), & \text{if } \Im(d_n) = +i, \\ \qquad\qquad 0, & \text{if neither.} \end{cases}$$

Do the same to any auxiliary registers such as $\Re\left(z'_{\text{exp, n}}\right)$ and $\Im\left(z'_{\text{exp, n}}\right)$ to apply the multiplication process to these also.

7. Apply the shift-and-add process effecting the multiplication of the $2^{-2n}$ term to the exponential registers. As this is the cross-term of a real and imaginary part, it is guaranteed imaginary, so it has a more limited set of possible manifestations.

If $\Re(d_n) = -1$ and $\Re(d_n) = +1$ and $\Im(d_n) = -i$ then $2^{-2n} d_{n,\Re} d_{n,\Im} = -2^{-2n} i$:

$$\Re(z_{\text{exp, n}}) := \Re(z_{\text{exp, n}}) + \text{sra}(\Im(z_{\text{exp, n-1}}), 2n),$$

$$\Im(z_{\text{exp, n}}) := \Im(z_{\text{exp, n}}) - \text{sra}(\Re(z_{\text{exp, n-1}}), 2n),$$

Whereas if $\Re(d_n) = +1$ and $\Im(d_n) = +i$ or $\Re(d_n) = -1$ and $\Im(d_n) = -i$ then $= +2^{-2n}i$:

$$\Re(z_{\text{exp, n}}) := \Re(z_{\text{exp, n}}) - \text{sra}(\Im(z_{\text{exp, n-1}}), 2n),$$

$$\Im(z_{\text{exp, n}}) := \Im(z_{\text{exp, n}}) + \text{sra}(\Re(z_{\text{exp, n-1}}), 2n),$$

wherein the signs are reversed in the latter case.

Do the same to any auxiliary registers such as $\Re(z'_{\text{exp, n}})$ and $\Im(z'_{\text{exp, n}})$ to apply the multiplication process to these also.

8. Subtract the corresponding entry in the logarithm tables from the registers:

$$\Re(z_{\text{log, n}}) := \Re(z_{\text{log, n-1}}) - \left(\log_2 \|1 + 2^{-n} d_{n,\Re}\| + \log_2 \|1 + 2^{-n} d_{n,\Im}\|\right),$$

$$= \Re(z_{\text{log, n-1}}) - \Re\left(\log_{\mathcal{A}}(1 + 2^{-n} d_{n,\Re}) + \log_{\mathcal{A}}(1 + 2^{-n} d_{n,\Im})\right),$$

$$= \Re(z_{\text{log, n-1}}) - \left(\text{table}_{\Re}[d_{n,\Re}, n] + \text{table}_{\Re}[d_{n,\Im}, n]\right),$$

$$\Im(z_{\text{log, n}}) := \Im(z_{\text{log, n-1}})$$

$$\qquad - \left(\frac{2}{\pi} \arg(1 + 2^{-n} d_{n,\Re}) + \frac{2}{\pi} \arg(1 + 2^{-n} d_{n,\Im})\right),$$

$$= \Im(z_{\text{log, n-1}}) - \Im\left(\log_{\mathcal{A}}(1 + 2^{-n} d_{n,\Re}) + \log_{\mathcal{A}}(1 + 2^{-n} d_{n,\Im})\right),$$

$$= \Im(z_{\text{log, n-1}}) - \left(\text{table}_{\Im}[d_{n,\Re}, n] + \text{table}_{\Im}[d_{n,\Im}, n]\right).$$

This is achieved using the look-up table constructions described in the previous section by $\log_{\mathcal{A}}$.

9. Return to step 2 for the next iteration, until $N$ is reached, at which point the registers will contain their final values:

$$\Re(z_{\text{exp, N}}) := \Re\left(z_{\text{integer input, output}} \times z_{\text{premultiply}} \times 2^{\Re(z_{\text{input}})} \left(e^{\pi/2}\right)^{i\Im(z_{\text{input}})}\right),$$

$$\Im(z_{\text{exp, N}}) := \Im\left(z_{\text{integer input, output}} \times z_{\text{premultiply}} \times 2^{\Re(z_{\text{input}})} \left(e^{\pi/2}\right)^{i\Im(z_{\text{input}})}\right),$$

And:

$$\Re'(z_{\text{exp, N}}) := \Re\left(z_{\text{integer input, output}} \times z_{\text{premultiply}'} \times 2^{\Re(z_{\text{input}})}\left(e^{\pi/2}\right)^{i\Im(z_{\text{input}})}\right),$$

$$\Im'(z_{\text{exp, N}}) := \Im\left(z_{\text{integer input, output}} \times z_{\text{premultiply}'} \times 2^{\Re(z_{\text{input}})}\left(e^{\pi/2}\right)^{i\Im(z_{\text{input}})}\right).$$

Having appreciated the form of the process, it is easy to find other testing procedures that are convergent, even sometimes in the required domain, by forming $\Re(z_{\text{log, test}})$, $\Im(z_{\text{log, test}})$) or both using different number of bits or different comparison values, although we have endeavored to reduce complexity by specifying the required value tests in the simplest known form.

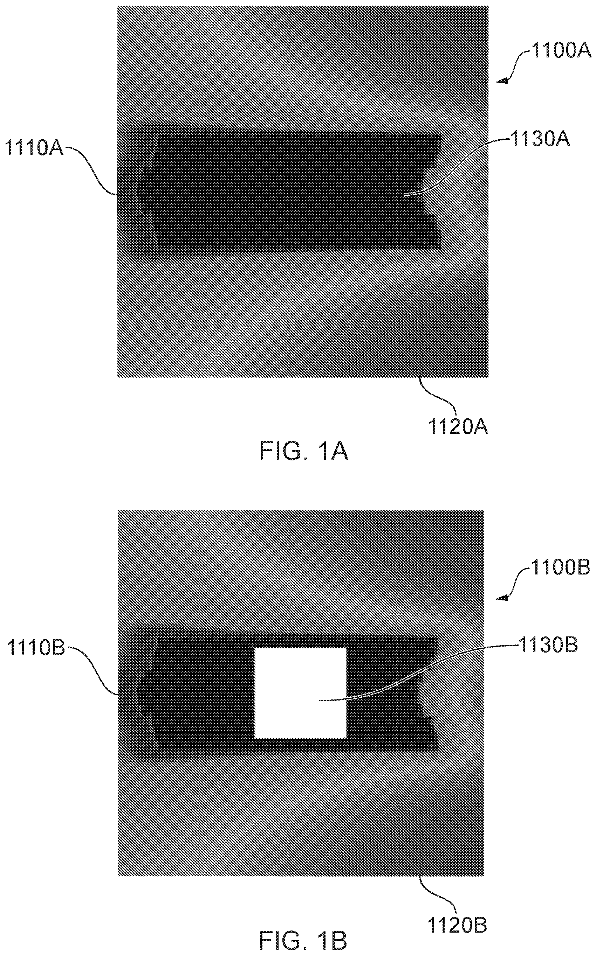

An illustration of the application of this procedure to values $z_{\text{input}} \in R = [-2.0, +2.0) + i[-2.0, +2.0)$ is shown in Figures 1A and 1B.

Figures 1A and 1B show illustration of errors in the complex plane in the logarithm-to-exponential process (floating-point implementation) for the BKML4m iteration. These figures correspond to illustrative tests of the iterative scheme in floating-point and with no range reduction steps to demonstrate the mathematical viability of the dynamical system rather than being a faithful reproduction of the iterative procedures outlined.

In Figure 1A, shown is a simulation 1100A where the x-axis 1120A is real, and the y-axis 1110A is imaginary in the input to the algorithm. Shading denotes the error (where a black shading 1130A implies the error is linearly related to the bits and iterations of the algorithm).

In Figure 1B, shown is a simulation 1100B where the x-axis 1120B is real, and the y-axis 1110B is imaginary in the input to the algorithm. The white square 1130B is constructed by inverting the color and denotes the portion of the domain (z_"input" " R"=[ -0.5⊣⊢ +0.5)+i[-0.5⊣⊢ +0.5)) which is required to be convergent. Therefore, if the algorithm functions in this zone, it is expected for the region to be shaded solid white.

VII. <u>BKML4m: Logarithm mode iteration</u>

The logarithm mode described in this section may also be modified to provide a complex division with the input value. If this is to be achieved, it can only occur in parallel by creating extra registers and ensuring that equivalent operations occur in these extra registers. This contrasts with the auxiliary multiplication, where the original register could be overloaded, which cannot be achieved here because the modification of the exponentiation register in this mode would prevent convergence of the algorithm. However, using auxiliary registers can circumvent this by mirroring operations, allowing the logarithm process to, if desired, produce complex-valued division of almost arbitrarily many other complex values with the value input to this process as denominator.

Assuming the fractional part of the output logarithms to be the output, the algorithm for the domain of convergence $z_{\text{input}} \in R = [+0.5, +1.0) + i[-\Re(R), +\Re(R))$ is:

1. Assuming there are four basic registers, labelled $\Re(z_{\text{log}})$, $\Im(z_{\text{log}})$, $\Re(z_{\text{exp}})$ and $\Im(z_{\text{exp}})$. Alongside, there are two extra slave division registers $\Re(z'_{\text{exp}})$ and $\Im(z'_{\text{exp}})$ to demonstrate how the method operates when used for auxiliary complex division. The initial values of these registers are:

$$\Re(z_{\text{log}}) := \Re(z_{\text{integer output, output}}),$$

$$\Im(z_{\text{log}}) := \Im(z_{\text{integer output, output}}),$$

$$\Re(z_{\text{exp}}) := \Re(z_{\text{input}}) - 1.0,$$

$$\Im\big(z_{\text{exp}}\big) := \Im\big(z_{\text{input}}\big),$$

The slave division registers may also be similarly constructed with:

$$\Re'\big(z_{\text{exp}}\big) := \Re\big(z_{\text{numerator'}} \div z_{\text{integer output, input}}\big),$$

$$\Im'\big(z_{\text{exp}}\big) := \Im\big(z_{\text{numerator'}} \div z_{\text{integer output, input}}\big).$$

Noting that the -1.0 is not applied to the registers $\Re\big(z'_{\text{exp}}\big)$ and $\Im\big(z'_{\text{exp}}\big)$.

2. Iterate through the values $0, \cdots, N - 1$ as the index n:

3. Shift right by $N - (n + 3)$ and then truncate $\Re\big(z_{\text{exp}}\big)$ to form $\Re\big(z_{\text{exp, test}}\big)$ ) such that it has six bits; one sign bit, two integer bits and three fraction bits in two's complement such that the range is [-4.0, +4.0) with the smallest change being 0.125. The multiplication of this value by $2^{-n}$ is implied by the initial shift.

4. Shift right by $N - (n + 1)$ and then truncate $\Im\big(z_{\text{exp}}\big)$ to form $\Im\big(z_{\text{exp, test}}\big)$ such that it has four bits; one sign bit, two integer bits and one fraction bits in two's complement such that the range is [-4.0, +4.0) with the smallest change being 0.5. The multiplication of this value by $2^{-n}$ is implied by the initial shift.
5. Test the two values to determine $d_n$:

$$\Re(d_n) := \begin{cases} +1, & \text{if } \Re\big(z_{\text{exp, test}}\big) < 6'\text{sb}111011 \text{ (or } < -0.625), \\ -1, & \text{if } \Re\big(z_{\text{exp, test}}\big) > 6'\text{sb}000100 \text{ (or } \geq +0.625), \\ 0, & \text{if neither,} \end{cases}$$

$$\Im(d_n) := \begin{cases} +i, & \text{if } \Im\big(z_{\text{exp, test}}\big) < 4'\text{sb}1111 \text{ (or } < -0.5), \\ -i, & \text{if } \Im\big(z_{\text{exp, test}}\big) > 4'\text{sb}0000 \text{ (or } \geq +0.5), \\ 0, & \text{if neither.} \end{cases}$$

6. Apply the shift-and-add process effecting the multiplication of the $2^{-n}$ terms to the exponential registers:

$$\Re\big(z_{\text{exp, n}}\big) := \Re\big(z_{\text{exp, n-1}}\big) +$$

$$+ \begin{cases} -2^{-n}\big(\Re\big(z_{\text{exp, n-1}}\big) + 1\big) = -\big(\text{sll}(1, F - n) + \text{sra}\big(\Re\big(z_{\text{exp, n-1}}\big), n\big)\big), & \text{if } \Re(d_n) = -1, \\ +2^{-n}\big(\Re\big(z_{\text{exp, n-1}}\big) + 1\big) = +\big(\text{sll}(1, F - n) + \text{sra}\big(\Re\big(z_{\text{exp, n-1}}\big), n\big)\big), & \text{if } \Re(d_n) = +1, \\ 0, & \text{if } z_{zero} \text{ is set,} \end{cases}$$

$$+ \begin{cases} +2^{-n}\Im\big(z_{\text{exp, n-1}}\big) = +\text{sra}\big(\Im\big(z_{\text{exp, n-1}}\big), n\big), & \text{if } \Im(d_n) = -i, \\ -2^{-n}\Im\big(z_{\text{exp, n-1}}\big) = -\text{sra}\big(\Im\big(z_{\text{exp, n-1}}\big), n\big), & \text{if } \Im(d_n) = +i, \\ 0, & \text{if } z_{zero} \text{ is set,} \end{cases}$$

And:

$$\mathfrak{I}(z_{\text{exp, n}}) := \mathfrak{I}(z_{\text{exp, n-1}}) +$$

$$+ \begin{cases} -2^{-n}\mathfrak{I}(z_{\text{exp, n-1}}) = -\text{sra}(\mathfrak{I}(z_{\text{exp, n-1}}), n), \text{ if } \mathfrak{R}(d_n) = -1, \\ +2^{-n}\mathfrak{I}(z_{\text{exp, n-1}}) = +\text{sra}(\mathfrak{I}(z_{\text{exp, n-1}}), n), \text{ if } \mathfrak{R}(d_n) = +1, \\ \qquad\qquad 0, \text{ if } z_{zero} \text{ is set,} \end{cases}$$

$$+ \begin{cases} -2^{-n}(\mathfrak{R}(z_{\text{exp, n-1}}) + 1) = -\Big(\text{sll}(1, F - n) + \text{sra}(\mathfrak{R}(z_{\text{exp, n-1}}), n)\Big), \text{ if } \mathfrak{I}(d_n) = -i, \\ +2^{-n}(\mathfrak{R}(z_{\text{exp, n-1}}) + 1) = +\Big(\text{sll}(1, F - n) + \text{sra}(\mathfrak{R}(z_{\text{exp, n-1}}), n)\Big), \text{ if } \mathfrak{I}(d_n) = +i, \\ \qquad\qquad 0, \text{ if } z_{zero} \text{ is set} \end{cases}$$

Do the same to any auxiliary registers such as $\mathfrak{R}(z'_{\text{exp}})$ and $\mathfrak{I}(z'_{\text{exp}})$ to apply the division process to these. However, the register will not require the correction for the 1 in the real part so instead the procedure would be:

$$\mathfrak{R}'(z_{\text{exp, n}}) := \mathfrak{R}'(z_{\text{exp, n-1}}) +$$

$$+ \begin{cases} -2^{-n}\mathfrak{R}(z'_{\text{exp, n-1}}) = -\text{sra}(\mathfrak{R}(z'_{\text{exp, n-1}}), n), \text{ if } \mathfrak{R}(d_n) = -1, \\ +2^{-n}\mathfrak{R}(z'_{\text{exp, n-1}}) = +\text{sra}(\mathfrak{R}(z'_{\text{exp, n-1}}), n), \text{ if } \mathfrak{R}(d_n) = +1, \\ \qquad\qquad 0, \text{ if } z_{zero} \text{ is set,} \end{cases}$$

$$+ \begin{cases} +2^{-n}\mathfrak{I}(z'_{\text{exp, n-1}}) = +\text{sra}(\mathfrak{I}(z'_{\text{exp, n-1}}), n), \text{ if } \mathfrak{I}(d_n) = -i, \\ -2^{-n}\mathfrak{I}(z'_{\text{exp, n-1}}) = -\text{sra}(\mathfrak{I}(z'_{\text{exp, n-1}}), n), \text{ if } \mathfrak{I}(d_n) = +i, \\ \qquad\qquad 0, \text{ if } z_{zero} \text{ is set.} \end{cases}$$

$$\mathfrak{I}'(z_{\text{exp, n}}) := \mathfrak{I}'(z_{\text{exp, n-1}}) +$$

$$+ \begin{cases} -2^{-n}\mathfrak{I}(z'_{\text{exp, n-1}}) = -\text{sra}(\mathfrak{I}(z'_{\text{exp, n-1}}), n), \text{ if } \mathfrak{R}(d_n) = -1, \\ +2^{-n}\mathfrak{I}(z'_{\text{exp, n-1}}) = +\text{sra}(\mathfrak{I}(z'_{\text{exp, n-1}}), n), \text{ if } \mathfrak{R}(d_n) = +1, \\ \qquad\qquad 0, \text{ if } z_{zero} \text{ is set,} \end{cases}$$

$$+ \begin{cases} -2^{-n}\mathfrak{R}(z'_{\text{exp, n-1}}) = -\text{sra}(\mathfrak{R}(z'_{\text{exp, n-1}}), n), \text{ if } \mathfrak{I}(d_n) = -i, \\ +2^{-n}\mathfrak{R}(z'_{\text{exp, n-1}}) = +\text{sra}(\mathfrak{R}(z'_{\text{exp, n-1}}), n), \text{ if } \mathfrak{I}(d_n) = +i, \\ \qquad\qquad 0, \text{ if } z_{zero} \text{ is set} \end{cases}$$

7. Apply the shift-and-add process effecting the multiplication of the $2^{-2n}$ term to the exponential registers. As this is the cross-term of a real and imaginary part, it is guaranteed imaginary, so it has a more limited set of possible manifestations.

If $\mathfrak{R}(d_n) = -1$ and $\mathfrak{I}(d_n) = +i$ or $\mathfrak{R}(d_n) = +1$ and $\mathfrak{I}(d_n) = -i$ then $2^{-2n}d_{n,\mathfrak{R}}d_{n,\mathfrak{I}} = -2^{-2n}i$ :

$$\mathfrak{R}(z_{\text{exp, n}}) := \mathfrak{R}(z_{\text{exp, n}}) + \text{sra}(\mathfrak{I}(z_{\text{exp, n-1}}), 2n),$$

$$\mathfrak{I}(z_{\text{exp, n}}) := \mathfrak{I}(z_{\text{exp, n}}) - \Big(\text{sll}(1, F - 2n) + \text{sra}(\mathfrak{R}(z_{\text{exp, n-1}}), 2n)\Big),$$

Whereas if $\Re(d_n) = +1$ and $\Im(d_n) = +i$ or $\Re(d_n) = -1$ and $\Im(d_n) = -i$ then $2^{-2n}d_{n,\Re}d_{n,\Im} = +2^{-2n}i$:

$$\Re(z_{\exp,\,n}) := \Re(z_{\exp,\,n}) - \mathrm{sra}(\Im(z_{\exp,\,n\text{-}1}),2n),$$

$$\Im(z_{\exp,\,n}) := \Im(z_{\exp,\,n}) + \left(\mathrm{sll}(1,F-2n) + \mathrm{sra}(\Re(z_{\exp,\,n\text{-}1}),2n)\right),$$

wherein the signs are reversed in the latter case.

Do the same to any auxiliary registers such as $\Re(z'_{\exp,\,n})$ and $\Im(z'_{\exp,\,n})$ to apply the division process to these also. Crucially, in these cases the correction for the +1 should be omitted.

If $\Re(d_n) = -1$ and $\Im(d_n) = +i$ or $\Re(d_n) = +1$ and $\Im(d_n) = -i$ then $2^{-2n}d_{n,\Re}d_{n,\Im} = -2^{-2n}i$:

$$\Re(z'_{\exp,\,n}) := \Re(z'_{\exp,\,n}) + \mathrm{sra}(\Im(z'_{\exp,\,n\text{-}1}),2n),$$

$$\Im(z'_{\exp,\,n}) := \Im(z'_{\exp,\,n}) - \mathrm{sra}(\Re(z'_{\exp,\,n\text{-}1}),2n),$$

Whereas if $\Re(d_n) = +1$ and $\Im(d_n) = +i$ or $\Re(d_n) = -1$ and $\Im(d_n) = -i$ then $= +2^{-2n}i$:

$$\Re(z'_{\exp,\,n}) := \Re(z'_{\exp,\,n}) - \mathrm{sra}(\Im(z'_{\exp,\,n\text{-}1}),2n),$$

$$\Im(z'_{\exp,\,n}) := \Im(z'_{\exp,\,n}) + \mathrm{sra}(\Re(z'_{\exp,\,n\text{-}1}),2n),$$

8. Subtract the corresponding entry in the logarithm tables from the registers:

$$\Re(z_{\log,\,n}) := \Re(z_{\log,\,n\text{-}1}) - \left(\log_2\|1 + 2^{-n}d_{n,\Re}\| + \log_2\|1 + 2^{-n}d_{n,\Im}\|\right),$$

$$= \Re(z_{\log,\,n\text{-}1}) - \Re\left(\log_{\mathcal{A}}(1 + 2^{-n}d_{n,\Re}) + \log_{\mathcal{A}}(1 + 2^{-n}d_{n,\Im})\right),$$

$$= \Re(z_{\log,\,n\text{-}1}) - \left(\mathrm{table}_{\Re}[d_{n,\Re},n] + \mathrm{table}_{\Re}[d_{n,\Im},n]\right),$$

$$\Im(z_{\log,\,n}) := \Im(z_{\log,\,n\text{-}1}) - \left(\tfrac{2}{\pi}\arg(1 + 2^{-n}d_{n,\Re}) + \tfrac{2}{\pi}\arg(1 + 2^{-n}d_{n,\Im})\right),$$

$$= \Im(z_{\log,\,n\text{-}1}) - \Im\left(\log_{\mathcal{A}}(1 + 2^{-n}d_{n,\Re}) + \log_{\mathcal{A}}(1 + 2^{-n}d_{n,\Im})\right),$$

$$= \Im(z_{\log,\,n\text{-}1}) - \left(\mathrm{table}_{\Im}[d_{n,\Re},n] + \mathrm{table}_{\Im}[d_{n,\Im},n]\right).$$

This is achieved using the look-up table constructions described in the previous section by $\log_{\mathcal{A}}$.

9. Return to step 2 for the next iteration, until *N* is reached, at which point the registers will contain their final values:

$$\Re(z_{\log, N}) := \log_2 \left\| \Re(z_{\text{input}}) + i\Im(z_{\text{input}}) \right\|,$$

$$\Im(z_{\log, N}) := {}^2\!/_\pi \arg\left(\Re(z_{\text{input}}) + i\Im(z_{\text{input}})\right),$$

And:

$$\Re(z'_{\exp, N}) := \Re\left(z_{\text{numerator'}} \div \left(z_{\text{integer output, input}} \times z_{\text{input}}\right)\right),$$

$$\Im(z'_{\exp, N}) := \Im\left(z_{\text{numerator'}} \div \left(z_{\text{integer output, input}} \times z_{\text{input}}\right)\right).$$

Having appreciated the form of the process, it is possible to find other testing procedures that are convergent, often even in the required domain of the form of range reduction used here, by forming $\Re(z_{\exp, \text{test}}), \Im(z_{\exp, \text{test}})$ or both using different number of bits or different comparison values, although we have endeavored to reduce complexity by specifying the required value tests in the simplest known form.

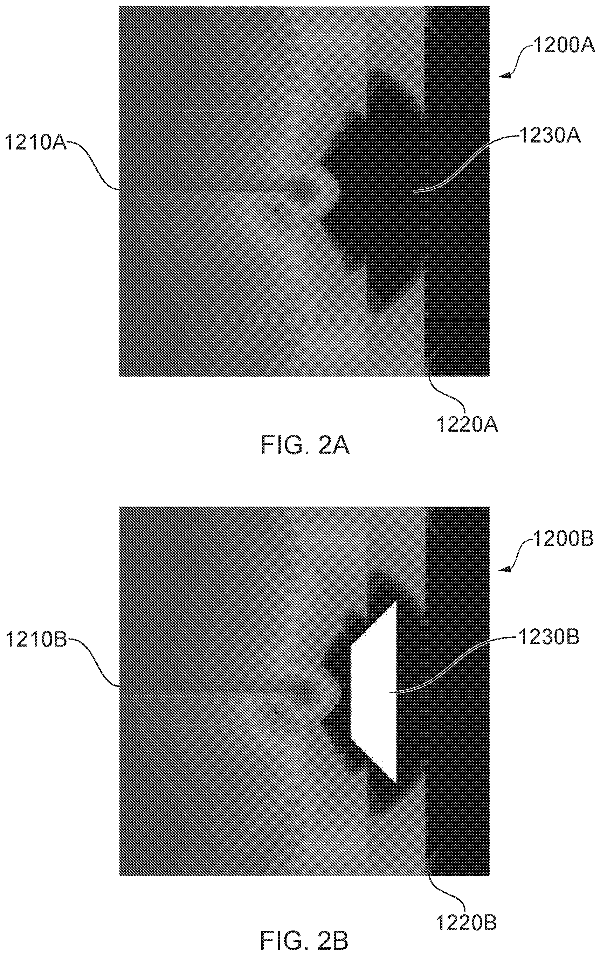

An illustration of the application of this procedure to values $z_{\text{input}} \in R = [-2.0, +2.0) + i[-2.0, +2.0)$ is shown in Figures 2A and 2B.

Figures 2A and 2B show illustrations of errors in the complex plane in the exponential-to-logarithm process (floating-point implementation) for the BKML4m process. These figures correspond to illustrative tests of the iterative scheme in floating-point and with no range reduction steps to demonstrate the mathematical viability of the dynamical system rather than being a faithful reproduction of the iterative procedures outlined.

In Figure 2A, shown is a simulation 1200A where the x-axis 1220A is real, and the y-axis 1210A is imaginary in the input to the algorithm. Shading denotes the error (where a black shading 1230A implies the error is linear related to the bits and iterations of the algorithm).

In Figure 2B, shown is a simulation 1200B where the x-axis 1220B is real, and the y-axis 1210B is imaginary in the input to the algorithm. The white trapezoid 1230B is constructed by inverting the color and denotes the portion of the domain ( $z_{\text{input}} \in R = [+0.5, +1.0) + i[-\Re(R), +\Re(R))$ ) which is required to be convergent. Therefore, if the algorithm functions in this zone, it is expected for the region to be shaded solid white. Branch cut artifacts have been compensated for on the real line.

## VIII. BKML4m: Unified logarithm-to-exponential and exponential-to-logarithm algorithm

Both directions can be unified into a single algorithm that can flip direction based on a bit switch.

## IX. Simplification of the convergence test

The first point to note when unifying the algorithms is that the 'correction' of the exponential in the exponential-to-logarithm, wherein the value is shifted so the origin is moved to zero by subtracting one, is only required by the test step. This means that the correction can be temporarily applied to the value under test on each iteration. This is further simplified by the fact that adding or subtracting high bits affects only the bits to the left of the other operand value, so a relatively large change of 1 can be made to affect only a single bit which is flipped when the exponential-to-logarithm mode is engaged via the bit switch.

## X. Reduced entropy table

It can be observed that:

$$\frac{2 \tan^{-1} 2^{-p}}{\pi} \approx \frac{1}{2} \log_2 1 + 2^{-p},$$

therefore, at the expense of an extra operation to correct for the error, a smaller table of corrections to the value $\log_2 1 + 2^{-p}$

may be stored instead of a lookup table for the value $\dfrac{2\tan^{-1}2^{-p}}{\pi}$. As the extra operation is inexpensive in logic compared to the full storage of the table, this is a way to encode operations using the fourth table storing the imaginary logarithm using reduced entropy.

## XI. Reduced bi-directional BKML4m

As the logarithm BKML4m requires one extra iteration with $n = 0$, this means that the bidirectional method also requires a zero iteration. Pulling this extra iteration out from the logarithm iteration and into the preprocessing stages generates further effects that allow for further savings in complexity and thus cost, as the zeroth iteration is the most non-linear in terms of the tests required for the iteration, so the form of the later iterations may be simplified.

## XII. Bi-directional BKML4m description

The full algorithm required, including the range reduction steps, convergence simplification, reduce entropy table and hoisted zeroth iteration is then described by:

1. Assuming there are four basic input registers, labelled $\Re\!\left(z_{\log}\right), \Im\!\left(z_{\log}\right)$, $\Re\!\left(z_{\exp}\right)$ and $\Im\!\left(z_{\exp}\right)$, to being with these may contain data that is beyond the region of convergence of the algorithms described. Therefore, we range reduce values outside the region of convergence to allow results for all real values to be found:

   a. If the process is taking logarithmic input and producing exponential output, then take the rounded integer part away from the real logarithm, leaving an $\Re\!\left(z_{\log}\right)$ value in the range [-0.5, +0.5). This integer real part is to be saved for later as $\Re\!\left(z_{\mathrm{integer,log}}\right)$. Further, take the quadrant number out from the imaginary part, leaving only the fraction of the quadrant, $\Im\!\left(z_{\log}\right)$ again in the range [-0.5, +0.5). The quadrant number may be 0, 1, 2 or 3, but any other upper bits in the imaginary logarithm are unnecessary and are ignored. The quadrant number is also saved for later as $\Im\!\left(z_{\mathrm{integer,log}}\right)$. $\Re\!\left(z_{\exp}\right)$ is generally initialized to 1, although any value may be passed through from the input. Equally, the imaginary part $\Im\!\left(z_{\exp}\right)$ is generally zero. The initial value of $z_{\exp}$ will be multiplied by the antilog (base $\mathcal{A}$) of the logarithm registers. Auxiliary registers will also have the multiplication through by the input antilog (base $\mathcal{A}$) applied.

   b. If the process is taking exponential input and producing logarithmic output, then the sign bits are first considered. The sign bits can be used to conditionally negate the values to compute absolute values of both the real and imaginary parts. By determining which of the real or imaginary part is larger in absolute value, the value may be moved via an effective complex multiplication to the quadrant wherein $\left\|\Im\!\left(z_{\exp}\right)\right\| < \Re\!\left(z_{\exp}\right)$ and $\Re\!\left(z_{\exp}\right) > 0$, while encoding the quadrant move in $\Im\!\left(z_{\mathrm{integer,log}}\right)$. Once completed, since the real part $\Re\!\left(z_{\exp}\right) > 0$, the leading zeroes may be counted and the bits of $\Re\!\left(z_{\exp}\right)$ (and also $\Im\!\left(z_{\exp}\right)$) shifted up into the range such that $0.5 \leq \Re\!\left(z_{\exp}\right) < 1$, where the number of bit places moved is recorded in $\Re\!\left(z_{\mathrm{integer,log}}\right)$. The logarithm registers are initialized with the values in $\Re\!\left(z_{\mathrm{integer,log}}\right)$ and $\Im\!\left(z_{\mathrm{integer,log}}\right)$. Auxiliary registers will have a division through by the input applied. Preprocess the zeroth iteration of the logarithm-to-exponentiation process with the following steps:

      i. Initialize Boolean constants which describe whether the imaginary value is greater in magnitude than the smallest valid real part ( $b_0 := \left|\Im\!\left(z_{\exp}\right)\right| \geq 0.5$ ), and from there whether it is positive (

$$b_+ := \Im\left(z_{\exp}\right) \geq +0.5$$ ) or negative ($b_- := (z_{\exp}) < -0.5$).

ii. If $b_0$ is set, shift $\Re\left(z_{\exp}\right)$ and $\Im\left(z_{\exp}\right)$ right by one bit.

$$\Re_{\mathrm{tmp}} := \begin{cases} +\mathrm{sra}\left(\Re\left(z_{\exp}\right), 1\right), & \text{if } b_0 \text{ is set,} \\ \Re\left(z_{\exp}\right), & \text{otherwise,} \end{cases}$$

$$\Im_{\mathrm{tmp}} := \begin{cases} +\mathrm{sra}\left(\Im\left(z_{\exp}\right), 1\right), & \text{if } b_0 \text{ is set,} \\ \Im\left(z_{\exp}\right), & \text{otherwise.} \end{cases}$$

This will effectively add one to the real part of the initial logarithm, making it one if $b_0$ is set.

iii. Compute a shift-and-add depending on the previously set Boolean constants:

$$\Re\left(z_{\exp}\right) := \Re_{\mathrm{tmp}} + \begin{cases} +\Re_{\mathrm{tmp}}, & \text{if } b_+ \text{ is set,} \\ -\Re_{\mathrm{tmp}}, & \text{if } b_- \text{ is set,} \\ 0, & \text{otherwise,} \end{cases}$$

$$\Im\left(z_{\exp}\right) := \Im_{\mathrm{tmp}} + \begin{cases} +\Im_{\mathrm{tmp}}, & \text{if } b_+ \text{ is set,} \\ -\Im_{\mathrm{tmp}}, & \text{if } b_- \text{ is set,} \\ 0, & \text{otherwise.} \end{cases}$$

Which therefore rotates by 45° ($\pi/4$) while multiplying through by the square root of two if $b_0$ is set.

iv. The square root of two change in magnitude from the previous step would denote a subtraction of the value of a half from the real part of the logarithm, making the total change a positive half. The imaginary part is also a positive or negative half from the 45° ($\pi/4$) rotation. This yields changes to the logarithm registers which at this point are usually initialized to zero:

$$\Re\left(z_{\log}\right) := \Re\left(z_{\log}\right) + \begin{cases} +1/2, & \text{if } b_0 \text{ is set,} \\ 0, & \text{otherwise,} \end{cases}$$

$$\Im\left(z_{\log}\right) := \Im\left(z_{\log}\right) + \begin{cases} +1/2, & \text{if } b_+ \text{ is set,} \\ -1/2, & \text{if } b_- \text{ is set,} \\ 0, & \text{otherwise.} \end{cases}$$

2. Iterate through the values $1, \cdots, N - 1$ as the index $n$:

3. Extract the reduced set of bits on which to conduct the tests for this iteration:

a. If the process is taking logarithmic input and producing exponential output, then:

i. Shift right by $N - n$ and truncate $\Re\left(z_{\log}\right)$ to form $\Re\left(z_{\mathrm{test}}\right)$ such that it has three bits; one sign bit and two integer bits in two's complement such that the range is [-4.0, +4.0) with the smallest change being 1. The multiplication of this value by $2^{-n}$ is implied by the initial shift.

ii. Shift right by $N - (n + 1)$ and truncate $\Im\left(z_{\log}\right)$ to form $\Im\left(z_{\mathrm{test}}\right)$ such that it has three bits; one sign bit, one integer bit and one fraction bit in two's complement such that the range is [-2.0, +2.0) with the smallest change being 0.5. The multiplication of this value by $2^{-n}$ is implied by the initial shift.

    b. If the process is taking exponential input and producing logarithmic output, then:

        i. Apply a subtraction of 1 from the value while testing $\Re\left(z_{\exp}\right)$. Due to the range reduction enabled by the removal of the zeroth iteration, this simply means any integer bit in $\Re\left(z_{\exp}\right)$ is set for the purposes of testing (and therefore always causes the representation of a negative value). For computation purposes therefore:

$$\Re\left(z_{\mathrm{tmp,exp}}\right) := \Re\left(z_{\exp}\right) - 1.0,$$

        This can be computed in line with the shift right by $N - (n + 1)$ and truncate $\Re\left(z_{\exp}\right)$ (or $\Re\left(z_{\mathrm{tmp,exp}}\right)$) to form $\Re\left(z_{\mathrm{test}}\right)$ such that it has three bits; one sign bit, one integer bit and one fraction bit in two's complement such that the range is [-2.0, +2.0) with the smallest change being 0.5. The multiplication of this value by $2^{-n}$ is implied by the shift.

        ii. Shift right by $N - (n + 1)$ and then truncate $\Im\left(z_{\exp}\right)$ to form $\Im\left(z_{\mathrm{test}}\right)$ such that it has three bits; one sign bit, one integer bit and one fraction bits in two's complement such that the range is [-2.0, +2.0) with the smallest change being 0.5. The multiplication of this value by $2^{-n}$ is implied by the initial shift.

4. Conduct tests on the two 3-bit values $\Re\left(z_{\mathrm{test}}\right)$ and $\Im\left(z_{\mathrm{test}}\right)$ to determine $d_n$. Eliminating any binary point metainformation - these values are signed integers from here on having a sign bit and two integer bits - the further operations may be harmonized, yielding:

$$b_{\Re,>} := \Re(z_{\mathrm{test}}) \geq +1,$$

$$b_{\Re,<} := \Re(z_{\mathrm{test}}) < -1,$$

$$b_{\Im,>} := \Im(z_{\mathrm{test}}) \geq +1,$$

$$b_{\Im,<} := \Im(z_{\mathrm{test}}) < -1,$$

where finally, taking *isexp* as the Boolean value that denotes a process that take logarithmic input and produces exponential output when set:

$$\Re(d_n) := \begin{cases} -1, \text{ if } b_{\Re,<} \text{ and } isexp \text{ or } b_{\Re,>} \text{ and } \neg isexp, \\ +1, \text{ if } b_{\Re,>} \text{ and } isexp \text{ or } b_{\Re,<} \text{ and } \neg isexp, \\ \quad 0, \text{ otherwise}, \end{cases}$$

$$\Im(d_n) := \begin{cases} -i, \text{ if } b_{\Im,<} \text{ and } isexp \text{ or } b_{\Im,>} \text{ and } \neg isexp, \\ +i, \text{ if } b_{\Im,>} \text{ and } isexp \text{ or } b_{\Im,<} \text{ and } \neg isexp, \\ \quad 0, \text{ if neither}. \end{cases}$$

5. Apply the shift-and-add process effecting the multiplication of the $2^{-n}$ terms to the exponential registers:

$$\Re\left(z_{\exp,\,n}\right) := \Re\left(z_{\exp,\,n\text{-}1}\right) +$$

$$+\begin{cases} -2^{-n}\Re\big(z_{\text{exp, n-1}}\big) = -\text{sra}\big(\Re\big(z_{\text{exp, n-1}}\big), n\big), \text{ if } \Re(d_n) = -1, \\ +2^{-n}\Re\big(z_{\text{exp, n-1}}\big) = +\text{sra}\big(\Re\big(z_{\text{exp, n-1}}\big), n\big), \text{ if } \Re(d_n) = +1, \\ \qquad\qquad 0, \text{ if } z_{zero} \text{ is set,} \end{cases}$$

$$+\begin{cases} +2^{-n}\Im\big(z_{\text{exp, n-1}}\big) = +\text{sra}\big(\Im\big(z_{\text{exp, n-1}}\big), n\big), \text{ if } \Im(d_n) = -i, \\ -2^{-n}\Im\big(z_{\text{exp, n-1}}\big) = -\text{sra}\big(\Im\big(z_{\text{exp, n-1}}\big), n\big), \text{ if } \Im(d_n) = +i, \\ \qquad\qquad 0, \text{ if } z_{zero} \text{ is set,} \end{cases}$$

And:

$$\Im\big(z_{\text{exp, n}}\big) := \Im\big(z_{\text{exp, n-1}}\big) +$$

$$+\begin{cases} -2^{-n}\Im\big(z_{\text{exp, n-1}}\big) = -\text{sra}\big(\Im\big(z_{\text{exp, n-1}}\big), n\big), \text{ if } \Re(d_n) = -1, \\ +2^{-n}\Im\big(z_{\text{exp, n-1}}\big) = +\text{sra}\big(\Im\big(z_{\text{exp, n-1}}\big), n\big), \text{ if } \Re(d_n) = +1, \\ \qquad\qquad 0, \text{ if } z_{zero} \text{ is set,} \end{cases}$$

$$+\begin{cases} -2^{-n}\Re\big(z_{\text{exp, n-1}}\big) = -\text{sra}\big(\Re\big(z_{\text{exp, n-1}}\big), n\big), \text{ if } \Im(d_n) = -i, \\ +2^{-n}\Re\big(z_{\text{exp, n-1}}\big) = +\text{sra}\big(\Re\big(z_{\text{exp, n-1}}\big), n\big), \text{ if } \Im(d_n) = +i, \\ \qquad\qquad 0, \text{ if } z_{zero} \text{ is set} \end{cases}$$

Do the same to any auxiliary registers such as $\Re\big(z'_{\text{exp,n-1}}\big)$ and $\Im\big(z'_{\text{exp,n-1}}\big)$ to apply the multiplication or division process to these also.

6. Apply the shift-and-add process effecting the multiplication of the $2^{-2n}$ term to the exponential registers (in some implementations, this may be replaced by a second application of the previous step if the extra serialization can be amortized into the time cost for the step). As this is the cross-term of a real and imaginary part, it is guaranteed imaginary, so it has a more limited set of possible manifestations.

If $\Re(d_n) = -1$ and $\Im(d_n) = +i$ or $\Re(d_n) = +1$ and $\Im(d_n) = -i$ then $2^{-2n}d_{n,\Re}d_{n,\Im} = -2^{-2n}i$:

$$\Re\big(z_{\text{exp, n}}\big) := \Re\big(z_{\text{exp, n}}\big) + \text{sra}\big(\Im\big(z_{\text{exp, n-1}}\big), 2n\big),$$

$$\Im\big(z_{\text{exp, n}}\big) := \Im\big(z_{\text{exp, n}}\big) - \text{sra}\big(\Re\big(z_{\text{exp, n-1}}\big), 2n\big),$$

Whereas if $\Re(d_n) = +1$ and $\Im(d_n) = +i$ or $\Re(d_n) = -1$ and $\Im(d_n) = -i$ then $2^{-2n}d_{n,\Re}d_{n,\Im} = +2^{-2n}i$:

$$\Re\big(z_{\text{exp, n}}\big) := \Re\big(z_{\text{exp, n}}\big) - \text{sra}\big(\Im\big(z_{\text{exp, n-1}}\big), 2n\big),$$

$$\Im\big(z_{\text{exp, n}}\big) := \Im\big(z_{\text{exp, n}}\big) + \text{sra}\big(\Re\big(z_{\text{exp, n-1}}\big), 2n\big),$$

wherein the signs are reversed in the latter case.

Do the same to any auxiliary registers such as $\Re\left(z'_{\text{exp, n}}\right)$ and $\Im\left(z'_{\text{exp, n}}\right)$ to apply the multiplication or division process to these also.

7. Subtract the corresponding entry in the logarithm tables from the registers:

$$\Re(z_{\log,\, n}) := \Re(z_{\log,\, n\text{-}1}) - \left(\log_2\left\|1 + 2^{-n}d_{n,\Re}\right\| + \log_2\left\|1 + 2^{-n}d_{n,\Im}\right\|\right),$$

$$= \Re(z_{\log,\, n\text{-}1}) - \Re\left(\log_{\mathcal{A}}\left(1 + 2^{-n}d_{n,\Re}\right) + \log_{\mathcal{A}}\left(1 + 2^{-n}d_{n,\Im}\right)\right),$$

$$= \Re(z_{\log,\, n\text{-}1}) - \left(\text{table}_{\Re}\left[d_{n,\Re}, n\right] + \text{table}_{\Re}\left[d_{n,\Im}, n\right]\right),$$

$$\Im(z_{\log,\, n}) := \Im(z_{\log,\, n\text{-}1}) - \left(\tfrac{2}{\pi}\arg\left(1 + 2^{-n}d_{n,\Re}\right) + \tfrac{2}{\pi}\arg\left(1 + 2^{-n}d_{n,\Im}\right)\right),$$

$$= \Im(z_{\log,\, n\text{-}1}) - \Im\left(\log_{\mathcal{A}}\left(1 + 2^{-n}d_{n,\Re}\right) + \log_{\mathcal{A}}\left(1 + 2^{-n}d_{n,\Im}\right)\right),$$

$$= \Im(z_{\log,\, n\text{-}1}) - \left(\text{table}_{\Im}\left[d_{n,\Re}, n\right] + \text{table}_{\Im}\left[d_{n,\Im}, n\right]\right).$$

This is achieved using the look-up table constructions described in the previous section by $\log_{\mathcal{A}}$ and for the imaginary part may be approximated by the low entropy table method given in the previous section.

8. Return to step 2 for the next iteration, until $N$ is reached, at which point the registers will contain the final values for the fractional portion of the calculation.

9. Compute range expansion on the values present in the registers, so:

a. If the process is taking logarithmic input and producing exponential output, then the quadrant number held in the integer $\Im\left(z_{\text{integer,log}}\right)$ is expanded, rotating back via multiplication of the exponentiated value $z_{\text{exp, N}}$ by the appropriate value from *{1, i, -1, -i}*. If the integer part of the logarithm was not applied, either this may be applied as a bit shift, or kept as an exponent, allowing the process to emit a floating-point value.

b. If the process is taking exponential input and producing logarithmic output, then if the integer part of the logarithm described by the leading zeroes count of the first step has not yet been applied, add this value.

XIII. <u>The BKML3dm variant</u>

A new solution was derived by choosing $d_n$ from the set of four possible values:

$$d_n \in \begin{cases} -1 - i + 2^{-n}i, \\ -1 + i - 2^{-n}i, \\ +1 + i + 2^{-n}i, \\ +1 - i - 2^{-n}i, \end{cases},$$

requiring only three logarithm lookup tables to obtain the logarithms (base $\mathcal{A}$) for each of the four values. This results in not only fewer lookup tables but has a further side effect of reducing further the complexity of the tests required and the dependency chains for each iteration. As each relies on fewer bits for the result, they may be computed more efficiently, or multiple steps may be calculated within each clock cycle.

A drawback of this approach is that some iterations (with a seemingly functional heuristic wherein those numbered with Fibonacci numbers must be processed twice) must be repeated to achieve convergence. As the repeated iterations share the same lookup tables, it is likely these may be computed in the same step without expanding the dependencies significantly.

This approach leads to a binary choice of modifier for each real value and imaginary value at each step. Intuitively, this must be more closely approaching an optimal solution to the overall problem.

With the proposed changes, the size of the lookup tables is reduced to $N$ discrete groups of 3N bits, with $3N^2$ bits overall.

XIV. <u>Look-up table construction</u>

When considering the logarithm register ($z_{\log}$) portion of the exponentiation and logarithm iterations, it can be shown that only three lookup tables need be constructed to contain the bit patterns of the logarithms required. These are:

$$l_{n,\Re+} = \log_2|1 + 2^{-n}| + \log_2|1 \pm 2^{-n}i|,$$

$$l_{n,\Re-} = \log_2|1 - 2^{-n}| + \log_2|1 \pm 2^{-n}i|,$$

$$l_{n,\Im} = \frac{2}{\pi}\tan^{-1}(2^{-n}),$$

Then the logarithms to use for the addition/subtraction portion will be for each possible $d_n \in \{$-1 $-i + 2^{-n}i$, -1 $+ i - 2^{-n}i$, +1 $+ i + 2^{-n}i$, +1 $- i - 2^{-n}i\}$:

$$\log_{\mathcal{A}}\left((1 - 2^{-n})(1 - 2^{-n}i)\right) = +l_{n,\Re-} - l_{n,\Im}i,$$

$$\log_{\mathcal{A}}\left((1 - 2^{-n})(1 + 2^{-n}i)\right) = +l_{n,\Re-} + l_{n,\Im}i,$$

$$\log_{\mathcal{A}}\left((1 + 2^{-n})(1 + 2^{-n}i)\right) = +l_{n,\Re+} + l_{n,\Im}i,$$

$$\log_{\mathcal{A}}\left((1 + 2^{-n})(1 - 2^{-n}i)\right) = +l_{n,\Re+} - l_{n,\Im}i,$$

These are then subtracted from the running total of the logarithm. In each case, the decision of the $d_n$ to use is based on the sign bit of the logarithm or the exponential with 1.0 subtracted to co-locate the origin of both logarithm-to-exponential and exponential-to-logarithm iterations. It is anticipated that using an estimation scheme may allow high-radix iterations to slice the domain into parallelized operations allowing for lower latency implementations.

XV. <u>BKML3dm: Exponentiation mode iteration</u>

Assuming the fractional part of the input logarithms to be the input, the algorithm for this method for the domain of convergence $z_{\text{input}} \in$ R = [-0.5, +0.5) + $i$ [-0.5, +0.5) can be written for exponentiation as:

1. Assuming there are four basic registers, labelled $\Re(z_{\log})$, $\Im(z_{\log})$, $\Re(z_{\exp})$ and $\Im(z_{\exp})$. Alongside, there are two extra slave multiplication registers $\Re'(z_{\exp})$ and $\Im'(z_{\exp})$ to demonstrate how the method operates when used for auxiliary complex multiplication. The initial values of these registers are:

$$\Re(z_{\log}) := \Re(z_{\text{input}}),$$

$$\Im(z_{\log}) := \Im(z_{\text{input}}),$$

$$\Re(z_{\exp}) := \Re(z_{\text{integer input, output}} \times z_{\text{premultiply}}),$$

$$\Im(z_{\exp}) := \Im(z_{\text{integer input, output}} \times z_{\text{premultiply}}),$$

where $z_{\text{premultiply}} := 1.0$, if there are no requirements for pre-multiplication. The slave multiplication registers may also be similarly constructed with:

$$\Re(z'_{\exp}) := \Re(z_{\text{integer input, output}} \times z'_{\text{premultiply}}),$$

$$\Im(z'_{\exp}) := \Im(z_{\text{integer input, output}} \times z'_{\text{premultiply}}).$$

2. Iterate through the values $1, \cdots, N$ as the index $n$, but repeating elements part of the Fibonacci sequence. These first few $n$ would therefore be:

$$n = 1, 1, 2, 2, 3, 3, 4, 5, 5, 6, 7, 8, 8, 9, \ldots$$

3. Test the sign bits of $\Re(z_{\log,n-1})$ and $\Im(z_{\log,n-1})$ to determine $d_n$:

$$\Re(d_n) := \begin{cases} -1, & \text{if } \Re(z_{\log,n-1}) < 0, \\ +1, & \text{if } \Re(z_{\log,n-1}) \geq 0, \end{cases}$$

$$\Im(d_n) := \begin{cases} -i, & \text{if } \Im(z_{\log,n-1}) < 0, \\ +i, & \text{if } \Im(z_{\log,n-1}) \geq 0, \end{cases}$$

4. Apply the shift-and-add process effecting the multiplication of the $2^{-n}$ terms to the exponential registers:

$$\Re(z_{\exp,\, n}) := \Re(z_{\exp,\, n-1}) +$$

$$+ \begin{cases} -2^{-n}\Re(z_{\exp,\, n-1}) = -\text{sra}(\Re(z_{\exp,\, n-1}), n), & \text{if } \Re(d_n) = -1, \\ +2^{-n}\Re(z_{\exp,\, n-1}) = +\text{sra}(\Re(z_{\exp,\, n-1}), n), & \text{if } \Re(d_n) = +1, \end{cases}$$

$$+ \begin{cases} +2^{-n}\Im(z_{\exp,\, n-1}) = +\text{sra}(\Im(z_{\exp,\, n-1}), n), & \text{if } \Im(d_n) = -i, \\ -2^{-n}\Im(z_{\exp,\, n-1}) = -\text{sra}(\Im(z_{\exp,\, n-1}), n), & \text{if } \Im(d_n) = +i, \end{cases}$$

And:

$$\Im(z_{\exp,\, n}) := \Im(z_{\exp,\, n-1}) +$$

$$+ \begin{cases} -2^{-n}\Im(z_{\exp,\, n-1}) = -\text{sra}(\Im(z_{\exp,\, n-1}), n), & \text{if } \Re(d_n) = -1, \\ +2^{-n}\Im(z_{\exp,\, n-1}) = +\text{sra}(\Im(z_{\exp,\, n-1}), n), & \text{if } \Re(d_n) = +1, \end{cases}$$

$$+ \begin{cases} -2^{-n}\Re(z_{\exp,\, n-1}) = -\text{sra}(\Re(z_{\exp,\, n-1}), n), & \text{if } \Im(d_n) = -i, \\ +2^{-n}\Re(z_{\exp,\, n-1}) = +\text{sra}(\Re(z_{\exp,\, n-1}), n), & \text{if } \Im(d_n) = +i, \end{cases}$$

Do the same to any auxiliary registers such as $\Re(z'_{\exp,n-1})$ and $\Im(z'_{\exp,n-1})$ to apply the multiplication process to these also.

5. Apply the shift-and-add process effecting the multiplication of the $2^{-2n}$ term to the exponential registers. As this is the cross-term of a real and imaginary part, it is guaranteed imaginary, so it has a more limited set of possible manifestations.

If $\Re(d_n) = -1$ and $\Im(d_n) = +i$ or $\Re(d_n) = +1$ and $\Im(d_n) = -i$ then $2^{-2n} d_{n,\Re} d_{n,\Im} = -2^{-2n} i$.

$$\Re(z_{\exp, n}) := \Re(z_{\exp, n}) + \mathrm{sra}(\Im(z_{\exp, n-1}), 2n),$$

$$\Im(z_{\exp, n}) := \Im(z_{\exp, n}) - \mathrm{sra}(\Re(z_{\exp, n-1}), 2n),$$

Whereas if $\Re(d_n) = +1$ and $\Im(d_n) = +i$ or $\Re(d_n) = -1$ and $\Im(d_n) = -i$ then $2^{-2n} d_{n,\Re} d_{n,\Im} = +2^{-2n} i$.

$$\Re(z_{\exp, n}) := \Re(z_{\exp, n}) - \mathrm{sra}(\Im(z_{\exp, n-1}), 2n),$$

$$\Im(z_{\exp, n}) := \Im(z_{\exp, n}) + \mathrm{sra}(\Re(z_{\exp, n-1}), 2n),$$

wherein the signs are reversed in the latter case.

Do the same to any auxiliary registers such as $\Re(z'_{\exp, n})$ and $\Im(z'_{\exp, n})$ to apply the multiplication process to these also.

6. Subtract the corresponding entry in the logarithm tables from the registers:

$$\Re(z_{\log, n}) := \Re(z_{\log, n-1}) - \left(\log_2 \|1 + 2^{-n} d_{n,\Re}\| + \log_2 \|1 + 2^{-n} d_{n,\Im}\|\right),$$

$$= \Re(z_{\log, n-1}) - \Re\left(\log_{\mathcal{A}}(1 + 2^{-n} d_{n,\Re}) + \log_{\mathcal{A}}(1 + 2^{-n} d_{n,\Im})\right),$$

$$= \Re(z_{\log, n-1}) - \left(\mathrm{table}_{\Re}[d_{n,\Re}, n] + \mathrm{table}_{\Re}[d_{n,\Im}, n]\right),$$

$$\Im(z_{\log, n}) := \Im(z_{\log, n-1}) - \left(\frac{2}{\pi} \arg(1 + 2^{-n} d_{n,\Re}) + \frac{2}{\pi} \arg(1 + 2^{-n} d_{n,\Im})\right),$$

$$= \Im(z_{\log, n-1}) - \Im\left(\log_{\mathcal{A}}(1 + 2^{-n} d_{n,\Re}) + \log_{\mathcal{A}}(1 + 2^{-n} d_{n,\Im})\right),$$

$$= \Im(z_{\log, n-1}) - \left(\mathrm{table}_{\Im}[d_{n,\Re}, n] + \mathrm{table}_{\Im}[d_{n,\Im}, n]\right).$$

This is achieved using the look-up table constructions described in the previous section by $\log_{\mathcal{A}}$.

7. Return to step 2 for the next iteration, until $N$ is reached, at which point the registers will contain the final values for the fractional portion of the calculation:

$$\Re(z_{\exp, N}) := \Re\left(z_{\text{integer input, output}} \times z_{\text{premultiply}} \times 2^{\Re(z_{\text{input}})} \left(e^{\pi/2}\right)^{i\Im(z_{\text{input}})}\right),$$

$$\Im(z_{\exp, N}) := \Im\left(z_{\text{integer input, output}} \times z_{\text{premultiply}} \times 2^{\Re(z_{\text{input}})} \left(e^{\pi/2}\right)^{i\Im(z_{\text{input}})}\right),$$

And:

$$\Re'\left(z_{\text{exp, N}}\right) := \Re\left(z_{\text{integer input, output}} \times z_{\text{premultiply'}} \times 2^{\Re(z_{\text{input}})}\left(e^{\pi}/2\right)^{i\Im(z_{\text{input}})}\right),$$

$$\Im'\left(z_{\text{exp, N}}\right) := \Im\left(z_{\text{integer input, output}} \times z_{\text{premultiply'}} \times 2^{\Re(z_{\text{input}})}\left(e^{\pi}/2\right)^{i\Im(z_{\text{input}})}\right).$$

Having appreciated the form of the process, it is easy to find other testing procedures that are convergent, although we have endeavored to reduce complexity by specifying the required domain region tests in the simplest known form.

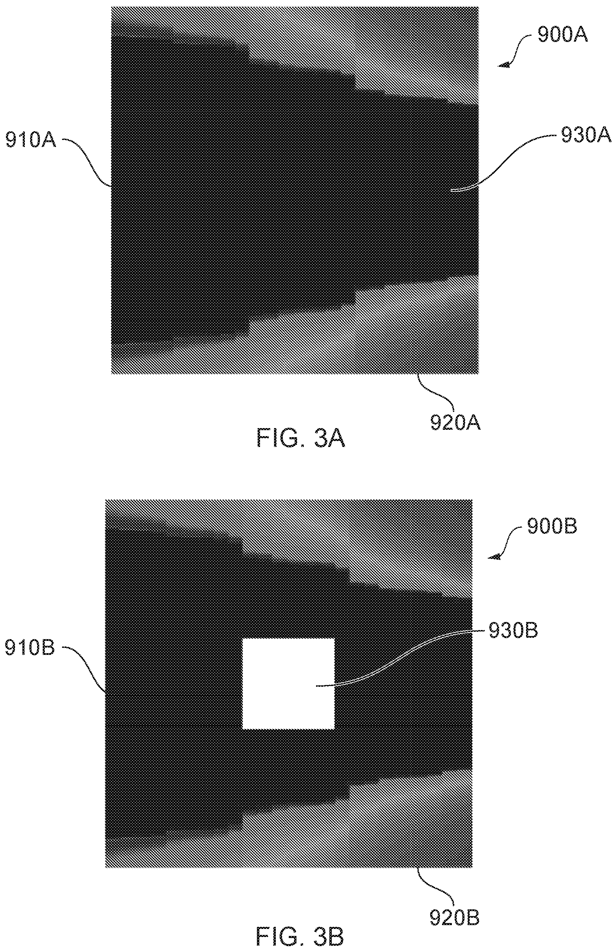

An illustration of the application of this procedure to values $z_{\text{input}} \in R = [-2.\ 0, +2.0) + i[-2.0, +2.0)$ is shown in Figures 3A and 3B.

Figures 3A and 3B show illustrations of errors in the complex plane in the logarithm-to-exponential process (floating-point implementation) for the BKML3dm iteration prior to the inclusion of the reduced entropy tables. These figures correspond to illustrative tests of the iterative scheme in floating-point and with no range reduction steps to demonstrate the mathematical viability of the dynamical system rather than being a faithful reproduction of the iterative procedures outlined.

In Figure 3A, shown is a simulation 900A where the x-axis 920A is real, and the y-axis 910A is imaginary in the input to the algorithm. Shading denotes the error (where a black shading 930A implies the error is linearly related to the bits and iterations of the algorithm).

In Figure 3B, shown is a simulation 900B where the x-axis 920B is real, and the y-axis 910B is imaginary in the input to the algorithm. The white square 930B is constructed by inverting the color and denotes the portion of the domain (z_"input" " R"=[-0.51⊣,⊢ +0.5)+i[-0.5⊣,⊢ +0.5)) which is required to be convergent. Therefore, if the algorithm functions in this zone, it is expected for the region to be shaded solid white.

XVI. <u>BKML3dm: Logarithm mode iteration</u>

Assuming the fractional part of the output logarithms to be the output, the algorithm for the domain of convergence $z_{\text{input}} \in R = [+0.5, +1.0) + i[-\Re(R), +\Re(R))$ is:

1. Assuming there are four basic registers, labelled $\Re\left(z_{\log}\right), \Im\left(z_{\log}\right), \Re\left(z_{\exp}\right)$ and $\Im\left(z_{\exp}\right)$. Alongside, there are two extra slave division registers $\Re'\left(z_{\exp}\right)$ and $\Im'\left(z_{\exp}\right)$ to demonstrate how the method operates when used for auxiliary complex division. The initial values of these registers are:

$$\Re\left(z_{\log}\right) := \Re\left(z_{\text{integer output, output}}\right),$$

$$\Im\left(z_{\log}\right) := \Im\left(z_{\text{integer output, output}}\right),$$

$$\Re\left(z_{\exp}\right) := \Re\left(z_{\text{input}}\right),$$

$$\Im\left(z_{\exp}\right) := \Im\left(z_{\text{input}}\right),$$

The slave division registers may also be similarly constructed with:

$$\Re\left(z'_{\exp}\right) := \Re\left(z'_{\text{numerator}} \div z_{\text{integer output, input}}\right),$$

$$\Im\left(z'_{\exp}\right) := \Im\left(z'_{\text{numerator}} \div z_{\text{integer output, input}}\right).$$

2. Iterate through the values $1, \cdots, N$ as the index $n$, but repeating elements part of the Fibonacci sequence. These first few $n$ would therefore be:

$$n = 1, 1, 2, 2, 3, 3, 4, 5, 5, 6, 7, 8, 8, 9, ...$$

3. Test the sign bits of $\Re(z_{\text{exp,n-1}}) - 1$ (where the -1 is computed by permuting the top two bits of the register) and $\Im(z_{\text{exp,n-1}})$ to determine $d_n$:

$$\Re(d_n) := \begin{cases} +1, \text{ if } (\Re(z_{\text{exp,n-1}}) - 1) < 0, \\ -1, \text{ if } (\Re(z_{\text{exp,n-1}}) - 1) \geq 0, \end{cases}$$

$$\Im(d_n) := \begin{cases} +i, \text{ if } \Im(z_{\text{exp,n-1}}) < 0, \\ -i, \text{ if } \Im(z_{\text{exp,n-1}}) \geq 0, \end{cases}$$

4. Apply the shift-and-add process effecting the multiplication of the $2^{-n}$ terms to the exponential registers:

$$\Re(z_{\text{exp, n}}) := \Re(z_{\text{exp, n-1}}) +$$

$$+ \begin{cases} -2^{-n}\Re(z_{\text{exp, n-1}}) = -\text{sra}(\Re(z_{\text{exp, n-1}}), n), \text{ if } \Re(d_n) = -1, \\ +2^{-n}\Re(z_{\text{exp, n-1}}) = +\text{sra}(\Re(z_{\text{exp, n-1}}), n), \text{ if } \Re(d_n) = +1, \end{cases}$$

$$+ \begin{cases} +2^{-n}\Im(z_{\text{exp, n-1}}) = +\text{sra}(\Im(z_{\text{exp, n-1}}), n), \text{ if } \Im(d_n) = -i, \\ -2^{-n}\Im(z_{\text{exp, n-1}}) = -\text{sra}(\Im(z_{\text{exp, n-1}}), n), \text{ if } \Im(d_n) = +i, \end{cases}$$

And:

$$\Im(z_{\text{exp, n}}) := \Im(z_{\text{exp, n-1}}) +$$

$$+ \begin{cases} -2^{-n}\Im(z_{\text{exp, n-1}}) = -\text{sra}(\Im(z_{\text{exp, n-1}}), n), \text{ if } \Re(d_n) = -1, \\ +2^{-n}\Im(z_{\text{exp, n-1}}) = +\text{sra}(\Im(z_{\text{exp, n-1}}), n), \text{ if } \Re(d_n) = +1, \end{cases}$$

$$+ \begin{cases} -2^{-n}\Re(z_{\text{exp, n-1}}) = -\text{sra}(\Re(z_{\text{exp, n-1}}), n), \text{ if } \Im(d_n) = -i, \\ +2^{-n}\Re(z_{\text{exp, n-1}}) = +\text{sra}(\Re(z_{\text{exp, n-1}}), n), \text{ if } \Im(d_n) = +i, \end{cases}$$

Do the same to any auxiliary registers such as $\Re(z'_{\text{exp,n-1}})$ and $\Im(z'_{\text{exp,n-1}})$ to apply the multiplication process to these also.

5. Apply the shift-and-add process effecting the multiplication of the $2^{-2n}$ term to the exponential registers. As this is the cross-term of a real and imaginary part, it is guaranteed imaginary, so it has a more limited set of possible manifestations.

If $\Re(d_n) = -1$ and $\Im(d_n) = +i$ or $\Re(d_n) = +1$ and $\Im(d_n) = -i$ then $2^{-2n}d_{n,\Re}d_{n,\Im} = -2^{-2n}i$:

$$\Re(z_{\text{exp, n}}) := \Re(z_{\text{exp, n}}) + \text{sra}(\Im(z_{\text{exp, n-1}}), 2n),$$

$$\Im(z_{\text{exp, n}}) := \Im(z_{\text{exp, n}}) - \text{sra}(\Re(z_{\text{exp, n-1}}), 2n),$$

Whereas if $\Re(d_n) = +1$ and $\Im(d_n) = +i$ or $\Re(d_n) = -1$ and $\Im(d_n) = {}_{-i}$ then $2^{-2n} d_{n,\Re} d_{n,\Im} = +2^{-2n} i$.

$$\Re\left(z_{\exp, n}\right) := \Re\left(z_{\exp, n}\right) - \mathrm{sra}\left(\Im\left(z_{\exp, n-1}\right), 2n\right),$$

$$\Im\left(z_{\exp, n}\right) := \Im\left(z_{\exp, n}\right) + \mathrm{sra}\left(\Re\left(z_{\exp, n-1}\right), 2n\right),$$

wherein the signs are reversed in the latter case.

Do the same to any auxiliary registers such as $\Re\left(z'_{\exp, n}\right)$ and $\Im\left(z'_{\exp, n}\right)$ to apply the multiplication process to these also.

6. Subtract the corresponding entry in the logarithm tables from the registers:

$$\Re\left(z_{\log, n}\right) := \Re\left(z_{\log, n-1}\right) - \left(\log_2\left\|1 + 2^{-n} d_{n,\Re}\right\| + \log_2\left\|1 + 2^{-n} d_{n,\Im}\right\|\right),$$

$$= \Re\left(z_{\log, n-1}\right) - \Re\left(\log_{\mathcal{A}}\left(1 + 2^{-n} d_{n,\Re}\right) + \log_{\mathcal{A}}\left(1 + 2^{-n} d_{n,\Im}\right)\right),$$

$$= \Re\left(z_{\log, n-1}\right) - \left(\mathrm{table}_{\Re}\left[d_{n,\Re}, n\right] + \mathrm{table}_{\Re}\left[d_{n,\Im}, n\right]\right),$$

$$\Im\left(z_{\log, n}\right) := \Im\left(z_{\log, n-1}\right) - \left(\tfrac{2}{\pi} \arg\left(1 + 2^{-n} d_{n,\Re}\right) + \tfrac{2}{\pi} \arg\left(1 + 2^{-n} d_{n,\Im}\right)\right),$$

$$= \Im\left(z_{\log, n-1}\right) - \Im\left(\log_{\mathcal{A}}\left(1 + 2^{-n} d_{n,\Re}\right) + \log_{\mathcal{A}}\left(1 + 2^{-n} d_{n,\Im}\right)\right),$$

$$= \Im\left(z_{\log, n-1}\right) - \left(\mathrm{table}_{\Im}\left[d_{n,\Re}, n\right] + \mathrm{table}_{\Im}\left[d_{n,\Im}, n\right]\right).$$

This is achieved using the look-up table constructions described in the previous section by $\log_{\mathcal{A}}$.

7. Return to step 2 for the next iteration, until $N$ is reached, at which point the registers will contain their final values:

$$\Re\left(z_{\log, N}\right) := \log_2\left\|\Re\left(z_{\mathrm{input}}\right) + i\Im\left(z_{\mathrm{input}}\right)\right\|,$$

$$\Im\left(z_{\log, N}\right) := \tfrac{2}{\pi} \arg\left(\Re\left(z_{\mathrm{input}}\right) + i\Im\left(z_{\mathrm{input}}\right)\right),$$

And:

$$\Re\left(z'_{\exp, N}\right) := \Re\left(z'_{\mathrm{numerator}} \div \left(z_{\mathrm{integer\ output, input}} \times z_{\mathrm{input}}\right)\right),$$

$$\Im\left(z'_{\exp, N}\right) := \Im\left(z'_{\mathrm{numerator}} \div \left(z_{\mathrm{integer\ output, input}} \times z_{\mathrm{input}}\right)\right).$$

Having appreciated the form of the process, it is possible to find other testing procedures that are convergent, even sometimes in the required domain, by forming $\Re\left(z_{\exp, \mathrm{test}}\right), \Im\left(z_{\exp, \mathrm{test}}\right)$ or both using different number of bits or different comparison values, although we have endeavored to reduce complexity by specifying the required value tests in the simplest known form.

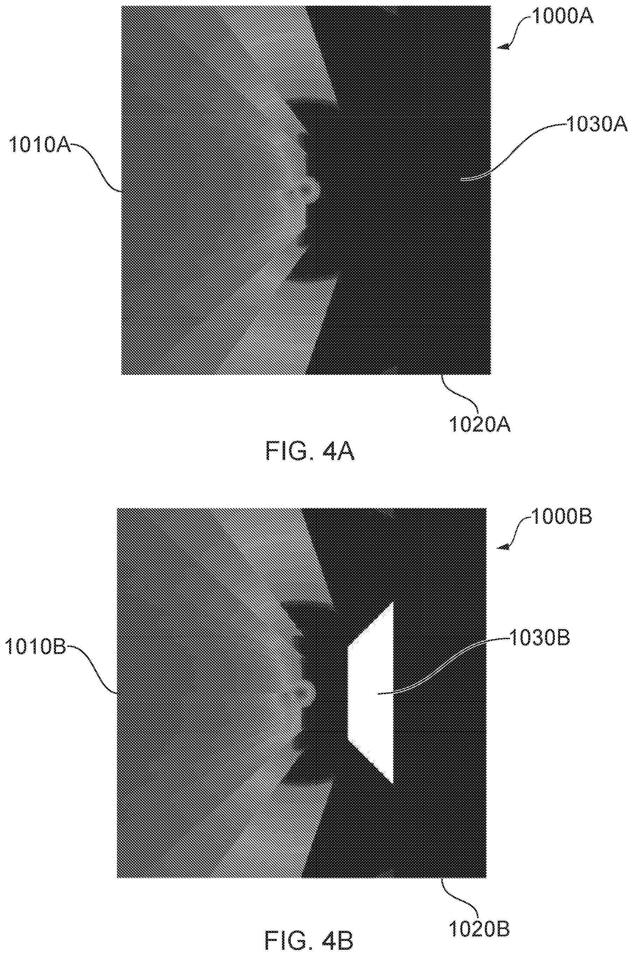

An illustration of the application of this procedure to values $z_{\mathrm{input}} \in R = [-2.0, +2.0) + i[-2.0, +2.0)$ is shown in Figures 4A and 4B.

Figures 4A and 4B show illustration of errors in the complex plane in the exponential-to-logarithm process (floating-point implementation) for the BKML3dm prior to the inclusion of the reduced entropy tables. These figures correspond to illustrative tests of the iterative scheme in floating-point and with no range reduction steps to demonstrate the mathematical viability of the dynamical system rather than being a faithful reproduction of the iterative procedures outlined.

In Figure 4A, shown is a simulation 1000A where the x-axis 1020A is real, and the y-axis 1010A is imaginary in the input to the algorithm. Shading denotes the error (where a black shading 1030A implies the error is linear related to the bits and iterations of the algorithm).

In Figure 4B, shown is a simulation 1000B where the x-axis 1020B is real, and the y-axis 1010B is imaginary in the input to the algorithm. The white trapezoid 1030B is constructed by inverting the color and denotes the portion of the domain (z_"input" " R"= [+0.5⊣,⊢ +1.0)+i[-R(R)⊣,⊢ +R(R))) which is required to be convergent. Therefore, if the algorithm functions in this zone, it is expected for the region to be shaded solid white. Branch cut artifacts have been compensated for on the real line.

XVII. BKML3dm: Unified logarithm-to-exponential and exponential-to-logarithm algorithm

With only three lookup tables and four possible values of $d_n$ for both directions of the algorithm, merging these in a bi-directional algorithm can be achieved. The steps are:

1. Assuming there are four basic input registers, labelled $\Re(z_{\log}), \Im(z_{\log})$, $\Re(z_{\exp})$ and $\Im(z_{\exp})$, to being with these may contain data that is beyond the region of convergence of the algorithms described. Therefore, we range reduce values outside the region of convergence to allow results for all real values to be found:

a. If the process is taking logarithmic input and producing exponential output, then take the rounded integer part away from the real logarithm, leaving an $\Re(z_{\log})$ value in the range [-0.5, +0.5). This integer real part is to be saved for later as $\Re(z_{\text{integer},\log})$. Further, take the quadrant number out from the imaginary part, leaving only the fraction of the quadrant, $\Im(z_{\log})$ again in the range [-0.5, +0.5). The quadrant number may be 0, 1, 2 or 3, but any other upper bits in the imaginary logarithm are unnecessary and are ignored. The quadrant number is also saved for later as $\Im(z_{\text{integer},\log})$. $\Re(z_{\exp})$ is generally initialized to 1, although any value may be passed through from the input. Equally, the imaginary part $\Im(z_{\exp})$ is generally zero. The initial value of $z_{\exp}$ will be multiplied by the antilog (base $\mathcal{A}$) of the logarithm registers. Auxiliary registers will also have the multiplication through by the input antilog (base $\mathcal{A}$) applied.

b. If the process is taking exponential input and producing logarithmic output, then the sign bits are first considered. The sign bits can be used to conditionally negate the values to compute absolute values of both the real and imaginary parts. By determining which of the real or imaginary part is larger in absolute value, the value may be moved via an effective complex multiplication to the quadrant wherein $\|\Im(z_{\exp})\| < \Re(z_{\exp})$ and $\Re(z_{\exp}) > 0$, while encoding the quadrant move in $\Im(z_{\text{integer},\log})$. Once completed, since the real part $\Re(z_{\exp}) > 0$, the leading zeroes may be counted and the bits of $\Re(z_{\exp})$ (and also $\Im(z_{\exp})$) shifted up into the range such that $0.5 \leq \Re(z_{\exp}) < 1$, where the number of bit places moved is recorded in $\Re(z_{\text{integer},\log})$. The logarithm registers are initialized with the values in $\Re(z_{\text{integer},\log})$ and $\Im(z_{\text{integer},\log})$. Auxiliary registers will have a division through by the input applied.

2. Iterate through the values 1, ⋯ , N as the index n, but repeating elements part of the Fibonacci sequence. These first few n would therefore be:

$$n = 1, 1, 2, 2, 3, 3, 4, 5, 5, 6, 7, 8, 8, 9, \ldots$$

3. Test the sign bits of the appropriate registers to determine $d_n$. As the sign bits are themselves the set of Boolean tests, this set of tests can almost be elided by taking the exclusive OR of the sign bit with a Boolean digit true when logarithmic output is intended:

a. If the process is taking logarithmic input and producing exponential output, then test the sign bits of $\Re\left(z_{\log,n-1}\right)$ and $\Im\left(z_{\log,n-1}\right)$:

$$\Re(d_n) := \begin{cases} -1, & \text{if } \Re\left(z_{\log,n-1}\right) < 0, \\ +1, & \text{if } \Re\left(z_{\log,n-1}\right) \geq 0, \end{cases}$$

$$\Im(d_n) := \begin{cases} -i, & \text{if } \Im\left(z_{\log,n-1}\right) < 0, \\ +i, & \text{if } \Im\left(z_{\log,n-1}\right) \geq 0, \end{cases}$$

So, the computation is:

$$\text{sign}_{\Re(d_n)} := \text{sign}_{\Re\left(z_{\log,n-1}\right)},$$

$$\text{sign}_{\Im(d_n)} := \text{sign}_{\Im\left(z_{\log,n-1}\right)},$$

b. If the process is taking exponential input and producing logarithmic output, then test the sign bits of $\Re\left(z_{\exp,n-1}\right) - 1$ (where the -1 is computed by permuting the top two bits of the register) and $\Im\left(z_{\exp,n-1}\right)$ to determine $d_n$:

$$\Re(d_n) := \begin{cases} +1, & \text{if } (\Re\left(z_{\exp,n-1}\right) - 1) < 0, \\ -1, & \text{if } (\Re\left(z_{\exp,n-1}\right) - 1) \geq 0, \end{cases}$$

$$\Im(d_n) := \begin{cases} +i, & \text{if } \Im\left(z_{\exp,n-1}\right) < 0, \\ -i, & \text{if } \Im\left(z_{\exp,n-1}\right) \geq 0, \end{cases}$$

So, the computation is:

$$\text{sign}_{\Re(d_n)} := \neg\text{sign}_{\Re\left(z_{\exp,n-1}\right)-1},$$

$$\text{sign}_{\Im(d_n)} := \neg\text{sign}_{\Im\left(z_{\exp,n-1}\right)-1},$$

4. Apply the shift-and-add process effecting the multiplication of the $2^{-n}$ terms to the exponential registers:

$$\Re\left(z_{\exp,\,n}\right) := \Re\left(z_{\exp,\,n-1}\right) +$$

$$+ \begin{cases} -2^{-n}\Re\left(z_{\exp,\,n-1}\right) = -\mathrm{sra}\left(\Re\left(z_{\exp,\,n-1}\right),n\right), \text{ if } \mathrm{sign}_{\Re(d_n)}, \\ +2^{-n}\Re\left(z_{\exp,\,n-1}\right) = +\mathrm{sra}\left(\Re\left(z_{\exp,\,n-1}\right),n\right), \text{ if } \neg\mathrm{sign}_{\Re(d_n)}, \end{cases}$$

$$+ \begin{cases} +2^{-n}\Im\left(z_{\exp,\,n-1}\right) = +\mathrm{sra}\left(\Im\left(z_{\exp,\,n-1}\right),n\right), \text{ if } \mathrm{sign}_{\Im(d_n)}, \\ -2^{-n}\Im\left(z_{\exp,\,n-1}\right) = -\mathrm{sra}\left(\Im\left(z_{\exp,\,n-1}\right),n\right), \text{ if } \neg\mathrm{sign}_{\Im(d_n)}, \end{cases}$$

And:

$$\Im\left(z_{\exp,\,n}\right) := \Im\left(z_{\exp,\,n-1}\right) +$$

$$+ \begin{cases} -2^{-n}\Im\left(z_{\exp,\,n-1}\right) = -\mathrm{sra}\left(\Im\left(z_{\exp,\,n-1}\right),n\right), \text{ if } \mathrm{sign}_{\Re(d_n)}, \\ +2^{-n}\Im\left(z_{\exp,\,n-1}\right) = +\mathrm{sra}\left(\Im\left(z_{\exp,\,n-1}\right),n\right), \text{ if } \neg\mathrm{sign}_{\Re(d_n)}, \end{cases}$$

$$+ \begin{cases} -2^{-n}\Re\left(z_{\exp,\,n-1}\right) = -\mathrm{sra}\left(\Re\left(z_{\exp,\,n-1}\right),n\right), \text{ if } \mathrm{sign}_{\Im(d_n)}, \\ +2^{-n}\Re\left(z_{\exp,\,n-1}\right) = +\mathrm{sra}\left(\Re\left(z_{\exp,\,n-1}\right),n\right), \text{ if } \neg\mathrm{sign}_{\Im(d_n)}, \end{cases}$$

Do the same to any auxiliary registers such as $\Re\left(z'_{\exp,n-1}\right)$ and $\Im\left(z'_{\exp,n-1}\right)$ to apply the multiplication or division process to these also.

5. Apply the shift-and-add process effecting the multiplication of the $2^{-2n}$ term to the exponential registers. As this is the cross-term of a real and imaginary part, it is guaranteed imaginary, so it has a more limited set of possible manifestations.

Wherein XOR is the logical binary operator of exclusive-or, if $\mathrm{sign}_{\Re(d_n)} \text{ XOR } \mathrm{sign}_{\Im(d_n)}$ then $2^{-2n}d_{n,\Re}d_{n,\Im} = -2^{-2n}i$ :

$$\Re\left(z_{\exp,\,n}\right) := \Re\left(z_{\exp,\,n}\right) + \mathrm{sra}\left(\Im\left(z_{\exp,\,n-1}\right),2n\right),$$

$$\Im\left(z_{\exp,\,n}\right) := \Im\left(z_{\exp,\,n}\right) - \mathrm{sra}\left(\Re\left(z_{\exp,\,n-1}\right),2n\right),$$

Whereas if $\neg\left(\mathrm{sign}_{\Re(d_n)} \text{ XOR } \mathrm{sign}_{\Im(d_n)}\right)$ then $2^{-2n}d_{n,\Re}d_{n,\Im} = +2^{-2n}i$ :

$$\Re\left(z_{\exp,\,n}\right) := \Re\left(z_{\exp,\,n}\right) - \mathrm{sra}\left(\Im\left(z_{\exp,\,n-1}\right),2n\right),$$

$$\Im\left(z_{\exp,\,n}\right) := \Im\left(z_{\exp,\,n}\right) + \mathrm{sra}\left(\Re\left(z_{\exp,\,n-1}\right),2n\right),$$

wherein the signs are reversed in the latter case.

Do the same to any auxiliary registers such as $\Re\left(z'_{\exp,\,n}\right)$ and $\Im\left(z'_{\exp,\,n}\right)$ to apply the multiplication or division process to these also.

6. Subtract the corresponding entries in the logarithm tables from the registers:

$$\Re\left(z_{\log,\,n}\right) := \Re\left(z_{\log,\,n-1}\right) -$$

$$+ \begin{cases} \log_2\left((1 - 2^{-n})\sqrt{1 + 2^{-2n}}\right), \text{ if } \mathrm{sign}_{\Re(d_n)}, \\ \log_2\left((1 + 2^{-n})\sqrt{1 + 2^{-2n}}\right), \text{ if } \neg\mathrm{sign}_{\Re(d_n)}, \end{cases}$$

$$\Im\left(z_{\log,\,n}\right) := \Im\left(z_{\log,\,n-1}\right) -$$

$$+ \begin{cases} -\dfrac{2}{\pi}\tan^{-1} 2^{-n}, \text{ if } \mathrm{sign}_{\Im(d_n)}, \\ +\dfrac{2}{\pi}\tan^{-1} 2^{-n}, \text{ if } \neg\mathrm{sign}_{\Im(d_n)}, \end{cases}$$

7. Return to step 2 for the next iteration, until $N$ is reached, at which point the registers will contain the final values for the fractional portion of the calculation.

8. Compute range expansion on the values present in the registers, so:

    a. If the process is taking logarithmic input and producing exponential output, then the quadrant number held in the integer $\Im\left(z_{\text{integer,log}}\right)$ is expanded, rotating back via multiplication of the exponentiated value $z_{\text{exp, N}}$ by the appropriate value from $\{1, i, -1, -i\}$. If the integer part of the logarithm was not applied, either this may be applied as a bit shift, or kept as an exponent, allowing the process to emit a floating-point value.

    b. If the process is taking exponential input and producing logarithmic output, then if the integer part of the logarithm described by the leading zeroes count of the first step has not yet been applied, add this value.

XVIII. <u>BKML3dm: High radix implementations, with 8-radix logarithm-to-exponential example</u>

The use of sign bits to drive the possible choices of $d_n$ allows the design to scale with radix, so iterations can be conceived which produce multiple bits of result per iteration. This is because the radix-2 has few serial operations, as described in the table:

| Radix | 2 | 4 | 8 | 16 | 32 | 64 | 128 |
|---|---|---|---|---|---|---|---|
| Real condition input (bits) | 1 | 4* | 6 | 7* | 8* | 9* | 10* |
| Imaginary condition input (bits) | 1 | 3* | 7 | 8* | 9* | 10* | 11* |
| Real condition output (bits) | 1 | 2 | 3 | 4 | 5 | 6 | 7 |
| Imaginary condition output (bits) | 1 | 2 | 3 | 4 | 5 | 6 | 7 |
| Parallelizable additions (logarithm terms) | 1 | 2 | 3 | 4 | 5 | 6 | 7 |
| Fully serial shift and add (serial terms) | 1 | 2 | 3 | 4 | 5 | 6 | 7 |
| Fully serial shift and add (parallel terms) | 3 | 3 | 3 | 3 | 3 | 3 | 3 |
| Fully parallel shift and add (serial terms) | 1 | 1 | 1 | 1 | 1 | 1 | 1 |
| Fully parallel shift and add (parallel terms) | 3 | 15 | 63 | 255 | 1023 | 4095 | 16385 |

where * denote estimated values. This suggests that the conditional decision-making portion of an iteration of a radix-16 implementation may be implemented as a 9-bit input, 4-bit output multiplexer or lookup table (LUT) for the real part and an 8-bit input, 4-bit output multiplexer or lookup table (LUT) for the imaginary part. These conditional decision lookup tables are fixed for a given iteration in each direction (logarithm-to-exponential or exponential-to-logarithm) but may for optimality differ between iterations.

Further, it should be noted that a radix-16 implementation of the multiply in the exponentiation part of the iteration may have 1 serial shift-and-add section, which involves 255 parallel additions, or 2 serial shift-and-add sections which each involve the parallel addition of 15 partial terms or 4 serial shift-and-add sections which each involve 3 parallel additions of shifted terms. Each can trade off calculation dependencies for quickly growing sets of terms.

A radix-8 implementation of logarithm-to-exponential (chosen because the conditional decision lookup tables required are linear, so can be written for the general case if radix-4 behavior is acceptable due to the limitations of the extra iterations required which can be otherwise mostly overcome) for example may be described by:

1. Assuming there are four basic registers, labelled $\Re(z_{\text{log}})$, $\Im(z_{\text{log}})$, $\Re(z_{\text{exp}})$ and $\Im(z_{\text{exp}})$. Alongside, there are two extra slave multiplication registers $\Re'(z_{\text{exp}})$ and $\Im'(z_{\text{exp}})$ to demonstrate how the method operates when used for auxiliary complex multiplication. The initial values of these registers are:

$$\Re(z_{\text{log}}) := \Re(z_{\text{input}}),$$

$$\Im(z_{\text{log}}) := \Im(z_{\text{input}}),$$

$$\Re(z_{\text{exp}}) := \Re(z_{\text{integer input, output}} \times z_{\text{premultiply}}),$$

$$\Im(z_{\text{exp}}) := \Im(z_{\text{integer input, output}} \times z_{\text{premultiply}}),$$

where $z_{\text{premultiply}} := 1.0$, if there are no requirements for pre-multiplication. The slave multiplication registers may also be similarly constructed with:

$$\Re(z'_{\text{exp}}) := \Re(z_{\text{integer input, output}} \times z'_{\text{premultiply}}),$$

$$\Im(z'_{\text{exp}}) := \Im(z_{\text{integer input, output}} \times z'_{\text{premultiply}}).$$

2. Iterate through the values $1, \cdots, N$ as the index $n$, but actually use triplets of consecutive bit shift numbers:

$$[S_{n,1}, S_{n,2}, S_{n,3}]$$
$$\in \{[1,2,3], [3,4,5], [5,6,7], [7,8,9], [9,10,11], [11,12,13], \ldots \},$$

3. Extract the reduced set of bits on which to conduct the tests for this logarithm-to-exponential iteration. This is the upper 8-bits of the real part and the upper 7-bits of the imaginary part:

a. Shift right by $N - (S_{n,1} + 3)$ and truncate $\Re(z_{\text{log}})$ to form $\Re(z_{\text{test}})$ such that it has six bits; one sign bit, two integer bits and three fraction bits in two's complement such that the range is [-4.0, +4.0) with the smallest change being 0.125. The multiplication of this value by $2^{-S_{n,1}}$ is implied by the initial shift.

b. Shift right by $N - (S_{n,1} + 4)$ and truncate $\Im(z_{\text{log}})$ to form $\Im(z_{\text{test}})$ such that it has seven bits; one sign bit, two integer bit and five fraction bits in two's complement such that the range is [-4.0, +4.0) with the smallest change being 0.0625. The multiplication of this value by $2^{-S_{n,1}}$ is implied by the initial shift.

4. Conduct tests on the two values $\Re(z_{\text{test}})$ and $\Im(z_{\text{test}})$ to determine $d_n$. In a production implementation of a uni- or bi-directional algorithm in either direction this may be brute forced to generated the least total error at the end of the iteration. However, for the logarithm-to-exponential iteration, the process appears largely linear, so a consistent choice can be made on that basis, yielding:

a. Real part test value:

$$
\text{test}_{\Re} := \begin{cases}
7, & \text{if } \Re(z_{\text{test}}) < -18, \\
6, & \text{if } \text{-}18 \le \Re(z_{\text{test}}) < -12, \\
5, & \text{if } \text{-}12 \le \Re(z_{\text{test}}) < -6, \\
4, & \text{if } \text{-}6 \le \Re(z_{\text{test}}) < 0, \\
3, & \text{if } 0 \le \Re(z_{\text{test}}) < +6, \\
2, & \text{if } +6 \le \Re(z_{\text{test}}) < +12, \\
1, & \text{if } +12 \le \Re(z_{\text{test}}) < +18, \\
0, & \text{if } +18 \le \Re(z_{\text{test}}),
\end{cases}
$$

b. Imaginary part test value:

$$
\text{test}_{\Im} := \begin{cases}
7, & \text{if } \Im(z_{\text{test}}) < -15, \\
6, & \text{if } \text{-}15 \le \Im(z_{\text{test}}) < -10, \\
5, & \text{if } \text{-}10 \le \Im(z_{\text{test}}) < -5, \\
4, & \text{if } \text{-}5 \le \Im(z_{\text{test}}) < 0, \\
3, & \text{if } 0 \le \Im(z_{\text{test}}) < +5, \\
2, & \text{if } +5 \le \Im(z_{\text{test}}) < +10, \\
1, & \text{if } +10 \le \Im(z_{\text{test}}) < +15, \\
0, & \text{if } +15 \le \Im(z_{\text{test}}),
\end{cases}
$$

5. Apply the shift-and-add process effecting the multiplication of the $2^{-S_{n,1}}$ terms to the exponential registers:

$$
\Re\left(z_{\exp, S_{n,1}}\right) := \Re\left(z_{\exp}\right) +
$$

$$
+ \begin{cases}
-2^{-S_{n,1}} \Re\left(z_{\exp}\right) = -\text{sra}\left(\Re\left(z_{\exp}\right), S_{n,1}\right), & \text{if } \text{test}_{\Re} \wedge 4, \\
+2^{-S_{n,1}} \Re\left(z_{\exp}\right) = +\text{sra}\left(\Re\left(z_{\exp}\right), S_{n,1}\right), & \text{if } \neg(\text{test}_{\Re} \wedge 4),
\end{cases}
$$

$$
+ \begin{cases}
+2^{-S_{n,1}} \Im\left(z_{\exp}\right) = +\text{sra}\left(\Im\left(z_{\exp}\right), S_{n,1}\right), & \text{if } \text{test}_{\Im} \wedge 4, \\
-2^{-S_{n,1}} \Im\left(z_{\exp}\right) = -\text{sra}\left(\Im\left(z_{\exp}\right), S_{n,1}\right), & \text{if } \neg(\text{test}_{\Im} \wedge 4),
\end{cases}
$$

And:

$$
\Im\left(z_{\exp, S_{n,1}}\right) := \Im\left(z_{\exp}\right) +
$$

$$
+ \begin{cases}
-2^{-S_{n,1}} \Im\left(z_{\exp}\right) = -\text{sra}\left(\Im\left(z_{\exp}\right), S_{n,1}\right), & \text{if } \text{test}_{\Re} \wedge 4, \\
+2^{-S_{n,1}} \Im\left(z_{\exp}\right) = +\text{sra}\left(\Im\left(z_{\exp}\right), S_{n,1}\right), & \text{if } \neg(\text{test}_{\Re} \wedge 4),
\end{cases}
$$

$$
+ \begin{cases}
-2^{-S_{n,1}} \Re\left(z_{\exp}\right) = -\text{sra}\left(\Re\left(z_{\exp}\right), S_{n,1}\right), & \text{if } \text{test}_{\Im} \wedge 4, \\
+2^{-S_{n,1}} \Re\left(z_{\exp}\right) = +\text{sra}\left(\Re\left(z_{\exp}\right), S_{n,1}\right), & \text{if } \neg(\text{test}_{\Im} \wedge 4),
\end{cases}
$$

Do the same to any auxiliary registers such as $\Re\left(z'_{\exp}\right)$ and $\Im\left(z'_{\exp}\right)$ to apply the multiplication process to these also, producing $\Re\left(z'_{\exp, S_{n,1}}\right)$ and $\Im\left(z'_{\exp, S_{n,1}}\right)$.

6. Apply the shift-and-add process effecting the multiplication of the $2^{-2S_{n,1}}$ term to the exponential registers. As this is the cross-term of a real and imaginary part, it is guaranteed imaginary, so it has a more limited set of possible manifestations.

Wherein XOR is the logical binary operator of exclusive-or, if $(\text{test}_{\Re} \wedge 4) \text{ XOR } (\text{test}_{\Im} \wedge 4)$ then $2^{-2S_{n,1}} d_{S_{n,1},\Re} d_{S_{n,1},\Im} = -2^{-2S_{n,1}} i$ :

$$\Re(z_{\text{exp}}) := \Re(z_{\text{exp}, \, S_{n,1}}) + \text{sra}(\Im(z_{\text{exp}, \, S_{n,1}}), 2S_{n,1}),$$

$$\Im(z_{\text{exp}}) := \Im(z_{\text{exp}, \, S_{n,1}}) - \text{sra}(\Re(z_{\text{exp}, \, S_{n,1}}), 2S_{n,1}),$$

Whereas if $\neg\big((\text{test}_{\Re} \wedge 4) \text{ XOR } (\text{test}_{\Im} \wedge 4)\big)$ then $2^{-2S_{n,1}} d_{S_{n,1},\Re} d_{S_{n,1},\Im} = +2^{-2S_{n,1}} i$ :

$$\Re(z_{\text{exp}}) := \Re(z_{\text{exp}, S_{n,1}}) - \text{sra}(\Im(z_{\text{exp}, \, S_{n,1}}), 2S_{n,1}),$$

$$\Im(z_{\text{exp}}) := \Im(z_{\text{exp}, \, S_{n,1}}) + \text{sra}(\Re(z_{\text{exp}, \, S_{n,1}}), 2S_{n,1}),$$

wherein the signs are reversed in the latter case.

Do the same to any auxiliary registers such as $\Re(z'_{\text{exp}, \, S_{n,1}})$ and $\Im(z'_{\text{exp}, \, S_{n,1}})$ to apply the multiplication or division process to these also, producing $\Re(z'_{\text{exp}})$ and $\Im(z'_{\text{exp}})$.

7. Apply the shift-and-add process effecting the multiplication of the $2^{-S_{n,2}}$ terms to the exponential registers:

$$\Re(z_{\text{exp}, \, S_{n,2}}) := \Re(z_{\text{exp}}) +$$

$$+ \begin{cases} -2^{-S_{n,2}}\Re(z_{\text{exp}}) = -\text{sra}(\Re(z_{\text{exp}}), S_{n,2}), \text{ if } \text{test}_{\Re} \wedge 2, \\ +2^{-S_{n,2}}\Re(z_{\text{exp}}) = +\text{sra}(\Re(z_{\text{exp}}), S_{n,2}), \text{ if } \neg(\text{test}_{\Re} \wedge 2), \end{cases}$$

$$+ \begin{cases} +2^{-S_{n,2}}\Im(z_{\text{exp}}) = +\text{sra}(\Im(z_{\text{exp}}), S_{n,2}), \text{ if } \text{test}_{\Im} \wedge 2, \\ -2^{-S_{n,2}}\Im(z_{\text{exp}}) = -\text{sra}(\Im(z_{\text{exp}}), S_{n,2}), \text{ if } \neg(\text{test}_{\Im} \wedge 2), \end{cases}$$

And:

$$\Im(z_{\text{exp}, \, S_{n,2}}) := \Im(z_{\text{exp}}) +$$

$$+ \begin{cases} -2^{-S_{n,2}}\Im(z_{\text{exp}}) = -\text{sra}(\Im(z_{\text{exp}}), S_{n,2}), \text{ if } \text{test}_{\Re} \wedge 2, \\ +2^{-S_{n,2}}\Im(z_{\text{exp}}) = +\text{sra}(\Im(z_{\text{exp}}), S_{n,2}), \text{ if } \neg(\text{test}_{\Re} \wedge 2), \end{cases}$$

$$+ \begin{cases} -2^{-S_{n,2}}\Re(z_{\text{exp}}) = -\text{sra}(\Re(z_{\text{exp}}), S_{n,2}), \text{ if } \text{test}_{\Im} \wedge 2, \\ +2^{-S_{n,2}}\Re(z_{\text{exp}}) = +\text{sra}(\Re(z_{\text{exp}}), S_{n,2}), \text{ if } \neg(\text{test}_{\Im} \wedge 2), \end{cases}$$

Do the same to any auxiliary registers such as $\Re(z'_{\text{exp}})$ and $\Im(z'_{\text{exp}})$ to apply the multiplication process to these also, producing $\Re(z'_{\text{exp}, \, S_{n,2}})$ and $\Im(z'_{\text{exp}, \, S_{n,2}})$.

8. Apply the shift-and-add process effecting the multiplication of the $2^{-2S_{n,2}}$ term to the exponential registers. As this is the cross-term of a real and imaginary part, it is guaranteed imaginary, so it has a more limited set of possible manifestations.

Wherein XOR is the logical binary operator of exclusive-or, if $(\text{test}_\Re \wedge 2)\ \text{XOR}\ (\text{test}_\Im \wedge 2)$ then $2^{-2S_{n,2}} d_{S_{n,2},\Re} d_{S_{n,2},\Im} = -2^{-2S_{n,2}} i$:

$$\Re\big(z_{\exp}\big) := \Re\big(z_{\exp,\ S_{n,2}}\big) + \mathrm{sra}\big(\Im\big(z_{\exp,\ S_{n,2}}\big), 2S_{n,2}\big),$$

$$\Im\big(z_{\exp}\big) := \Im\big(z_{\exp,\ S_{n,2}}\big) - \mathrm{sra}\big(\Re\big(z_{\exp,\ S_{n,2}}\big), 2S_{n,2}\big),$$

Whereas if $\neg\big((\text{test}_\Re \wedge 2)\ \text{XOR}\ (\text{test}_\Im \wedge 2)\big)$ then $2^{-2S_{n,2}} d_{S_{n,2},\Re} d_{S_{n,2},\Im} = +2^{-2S_{n,2}}i$:

$$\Re\big(z_{\exp}\big) := \Re\big(z_{\exp,S_{n,2}}\big) - \mathrm{sra}\big(\Im\big(z_{\exp,\ S_{n,2}}\big), 2S_{n,2}\big),$$

$$\Im\big(z_{\exp}\big) := \Im\big(z_{\exp,\ S_{n,2}}\big) + \mathrm{sra}\big(\Re\big(z_{\exp,\ S_{n,2}}\big), 2S_{n,2}\big),$$

wherein the signs are reversed in the latter case.

Do the same to any auxiliary registers such as $\Re\big(z'_{\exp,\ S_{n,2}}\big)$ and $\Im\big(z'_{\exp,\ S_{n,2}}\big)$ to apply the multiplication or division process to these also, producing $\Re\big(z'_{\exp}\big)$ and $\Im\big(z'_{\exp}\big)$.

9. Apply the shift-and-add process effecting the multiplication of the $2^{-S_{n,3}}$ terms to the exponential registers:

$$\Re\big(z_{\exp,\ S_{n,3}}\big) := \Re\big(z_{\exp}\big) +$$

$$+ \begin{cases} -2^{-S_{n,3}} \Re\big(z_{\exp}\big) = -\mathrm{sra}\big(\Re\big(z_{\exp}\big), S_{n,3}\big), & \text{if } \text{test}_\Re \wedge 1, \\ +2^{-S_{n,3}} \Re\big(z_{\exp}\big) = +\mathrm{sra}\big(\Re\big(z_{\exp}\big), S_{n,3}\big), & \text{if } \neg(\text{test}_\Re \wedge 1), \end{cases}$$

$$+ \begin{cases} +2^{-S_{n,3}} \Im\big(z_{\exp}\big) = +\mathrm{sra}\big(\Im\big(z_{\exp}\big), S_{n,3}\big), & \text{if } \text{test}_\Im \wedge 1, \\ -2^{-S_{n,3}} \Im\big(z_{\exp}\big) = -\mathrm{sra}\big(\Im\big(z_{\exp}\big), S_{n,3}\big), & \text{if } \neg(\text{test}_\Im \wedge 1), \end{cases}$$

And:

$$\Im\big(z_{\exp,\ S_{n,3}}\big) := \Im\big(z_{\exp}\big) +$$

$$+ \begin{cases} -2^{-S_{n,3}} \Im\big(z_{\exp}\big) = -\mathrm{sra}\big(\Im\big(z_{\exp}\big), S_{n,3}\big), & \text{if } \text{test}_\Re \wedge 1, \\ +2^{-S_{n,3}} \Im\big(z_{\exp}\big) = +\mathrm{sra}\big(\Im\big(z_{\exp}\big), S_{n,3}\big), & \text{if } \neg(\text{test}_\Re \wedge 1), \end{cases}$$

$$+ \begin{cases} -2^{-S_{n,3}} \Re\big(z_{\exp}\big) = -\mathrm{sra}\big(\Re\big(z_{\exp}\big), S_{n,3}\big), & \text{if } \text{test}_\Im \wedge 1, \\ +2^{-S_{n,3}} \Re\big(z_{\exp}\big) = +\mathrm{sra}\big(\Re\big(z_{\exp}\big), S_{n,3}\big), & \text{if } \neg(\text{test}_\Im \wedge 1) \end{cases}$$

Do the same to any auxiliary registers such as $\Re\big(z'_{\exp}\big)$ and $\Im\big(z'_{\exp}\big)$ to apply the multiplication process to

these also, producing $\Re\left(z'_{\exp,\,S_{n,3}}\right)$ and $\Im\left(z'_{\exp,\,S_{n,3}}\right)$.

10. Apply the shift-and-add process effecting the multiplication of the $2^{-2S_{n,3}}$ term to the exponential registers. As this is the cross-term of a real and imaginary part, it is guaranteed imaginary, so it has a more limited set of possible manifestations.

Wherein XOR is the logical binary operator of exclusive-or, if $(\text{test}_{\Re} \wedge 1)\ \text{XOR}\ (\text{test}_{\Im} \wedge 1)$ then $2^{-2S_{n,3}} d_{S_{n,3},\Re} d_{S_{n,3},\Im} = -2^{-2S_{n,3}} i$:

$$\Re\left(z_{\exp}\right) := \Re\left(z_{\exp,\,S_{n,3}}\right) + \text{sra}\left(\Im\left(z_{\exp,\,S_{n,3}}\right), 2S_{n,3}\right),$$

$$\Im\left(z_{\exp}\right) := \Im\left(z_{\exp,\,S_{n,3}}\right) - \text{sra}\left(\Re\left(z_{\exp,\,S_{n,3}}\right), 2S_{n,3}\right),$$

Whereas if $\neg\left((\text{test}_{\Re} \wedge 1)\ \text{XOR}\ (\text{test}_{\Im} \wedge 1)\right)$ then $2^{-2S_{n,3}} d_{S_{n,3},\Re} d_{S_{n,3},\Im} =$ $+2^{-2S_{n,3}}i$:

$$\Re\left(z_{\exp}\right) := \Re\left(z_{\exp,S_{n,3}}\right) - \text{sra}\left(\Im\left(z_{\exp,\,S_{n,3}}\right), 2S_{n,3}\right),$$

$$\Im\left(z_{\exp}\right) := \Im\left(z_{\exp,\,S_{n,3}}\right) + \text{sra}\left(\Re\left(z_{\exp,\,S_{n,3}}\right), 2S_{n,3}\right),$$

wherein the signs are reversed in the latter case.

Do the same to any auxiliary registers such as $(z'_{\exp,\,Sn,3})$ and $\Im\left(z'_{\exp,\,S_{n,3}}\right)$ to apply the multiplication or division process to these also, producing $\Re\left(z'_{\exp}\right)$ and $\Im\left(z'_{\exp}\right)$.

11. Subtract the corresponding entries in the logarithm tables from the registers:

$$\Re\left(z_{\log}\right) := \Re\left(z_{\log}\right) - ($$

$$+ \begin{cases} \log_2\left((1 - 2^{-S_{n,1}})\sqrt{1 + 2^{-2S_{n,1}}}\right), \text{ if } \text{test}_\Re \wedge 4, \\ \log_2\left((1 + 2^{-S_{n,1}})\sqrt{1 + 2^{-2S_{n,1}}}\right), \text{ if } \neg(\text{test}_\Re \wedge 4), \end{cases}$$

$$+ \begin{cases} \log_2\left((1 - 2^{-S_{n,2}})\sqrt{1 + 2^{-2S_{n,2}}}\right), \text{ if } \text{test}_\Re \wedge 2, \\ \log_2\left((1 + 2^{-S_{n,2}})\sqrt{1 + 2^{-2S_{n,2}}}\right), \text{ if } \neg(\text{test}_\Re \wedge 2), \end{cases}$$

$$+ \begin{cases} \log_2\left((1 - 2^{-S_{n,3}})\sqrt{1 + 2^{-2S_{n,3}}}\right), \text{ if } \text{test}_\Re \wedge 1, \\ \log_2\left((1 + 2^{-S_{n,3}})\sqrt{1 + 2^{-2S_{n,3}}}\right), \text{ if } \neg(\text{test}_\Re \wedge 1), \end{cases}$$

$$)$$

$$\Im\left(z_{\log, n}\right) := \Im\left(z_{\log}\right) - ($$

$$+ \begin{cases} -\dfrac{2}{\pi}\tan^{-1} 2^{-S_{n,1}}, \text{ if } \text{test}_\Re \wedge 4, \\ +\dfrac{2}{\pi}\tan^{-1} 2^{-S_{n,1}}, \text{ if } \neg(\text{test}_\Re \wedge 4), \end{cases}$$

$$+ \begin{cases} -\dfrac{2}{\pi}\tan^{-1} 2^{-S_{n,2}}, \text{ if } \text{test}_\Re \wedge 2, \\ +\dfrac{2}{\pi}\tan^{-1} 2^{-S_{n,2}}, \text{ if } \neg(\text{test}_\Re \wedge 2), \end{cases}$$

$$+ \begin{cases} -\dfrac{2}{\pi}\tan^{-1} 2^{-S_{n,3}}, \text{ if } \text{test}_\Re \wedge 1, \\ +\dfrac{2}{\pi}\tan^{-1} 2^{-S_{n,3}}, \text{ if } \neg(\text{test}_\Re \wedge 1), \end{cases}$$

$$)$$

12. Return to step 2 for the next iteration, until N is reached and the set of step-groups are exhausted up to the required precision, at which point the registers will contain the final values for the fractional portion of the calculation.
13. Compute range expansion on the values present in the registers, so:

a. If the process is taking logarithmic input and producing exponential output, then the quadrant number held in the integer $\Im\left(z_{\text{integer,log}}\right)$ is expanded, rotating back via multiplication of the exponentiated value $z_{\exp}$ by the appropriate value from {1, i, -1, -i}. If the integer part of the logarithm was not applied, either this may be applied as a bit shift, or kept as an exponent, allowing the process to emit a floating-point value.

b. If the process is taking exponential input and producing logarithmic output, then if the integer part of the logarithm described by the leading zeroes count of the first step has not yet been applied to the result, add this value.

This process may be modified to accept different conditional testing tables and be extended to different radices. The multiplication approach to build the conditional testing tables in the earlier steps will not be consistent across all $2^n$-radix radices and iterations, but may be instead obtained through brute force, finding a combination of subsets of the input bits which in a particular pattern of cutoff values generate an ascending or descending set of $2^n$ possible output values which taken in concert generate a lookup for the n sub-iterations that exhibits the desired convergence behavior.

XIX. Closing Observations

This disclosure has demonstrated that a reduction in the number of logarithm lookup tables, from eight values per result bit down to three or four, is possible. This is achieved by treating the real and imaginary parts as separate multiplies when looking up the logarithmic representation via the lookup tables of the logarithm values. Further, the subtraction of one present in the exponential-to-logarithm process can be merged in the conditional decision-making structure with negligible impact.

High radix functionality has been demonstrated by reducing the possible choices of shift-and-add multiplications, to the point where many simple bit switches computable at the beginning of a single high radix iteration can trigger many parallelizable logarithm subtraction and exponential multiplications, yielding an algorithm suitable for inclusion into modern high speed integrated circuitry.

XX. Example use cases for bi-directional BKML4m

It has been shown in BKML4m, which seems to be the most applicable variant of the algorithm taking in account the optimizations for reduced table size, because of the simple implementation coupled with the ability to achieve both logarithm-to-exponential and exponential-to-logarithm modes within the same design. This is useful in that it can be used to reversibly achieve micro-operations potentially dispatching per cycle without flushing and mode switching at a low area cost to complete a greater scope of macro-scale operations than is usually possible. This algorithm is only slightly more expensive than the summed cost of a real binary logarithm and CORDIC unit, but has greater flexibility than any possible implementation that involves these alone in that the operations computed by the unit may be changed on a per-result basis without pipeline flushing.

In the following, it is shown through an example micro-architecture that operations may be completed by using the given invention to efficiently complete all of the more involved arithmetic operations usually consigned to a plethora of sub-units in complex architectures.

For simplicity of illustration all registers in this example of a toy instruction set architecture are complex-valued and include an exponent (as real operations are subsets of the complex-valued operations), $r0 contains a constant read-only zero and $r1 contains a constant read-only one (1.0 + 0.0i). In a real implementation it is assumed that the details of the inputs and outputs are suitably multiplexed or stubbed to a more realistic register set. The mnemonic then used to call the method block (which may be any bi-directional method from the above set) is:

METHOD <in_log> <in_exp> <out_log> <out_exp> <direction>

where the auxiliary registers have been left out but may be optionally included for fast (and in the case of divide potentially faster) vector-scalar complex multiply and divide. It should also be noted that a non-zero <direction> yields logarithm-to-exponential, whereas a zero-direction yield exponential-to-logarithm.

Then for example:

Logarithm of $r2 in $r3:
METHOD $r0 $r2 $r3 $r0 $r0

Exponential of $r2 in $r3:
METHOD $r2 $r0 $r0 $r3 $r1

Multiplication of $r2 by $r3 into $r4:

METHOD $r0 $r3 $r5 $r0 $r0
METHOD $r5 $r2 $r0 $r4 $r1

Division of $r2 by $r3 into $r4:

METHOD $r0 $r3 $r5 $r0 $r0
NEGATE $r5
METHOD $r5 $r2 $r0 $r4 $r1

Square of $r2 into $r3:

```
METHOD $r0 $r2 $r4 $r0 $r0
SRA $r5 $r4 1
METHOD $r5 $r0 $r0 $r3 $r1
```

Square root of $r2 into $r3:

```
METHOD $r0 $r2 $r4 $r0 $r0
SLA $r5 $r4 1
METHOD $r5 $r0 $r0 $r3 $r1
```

Multiplications and divisions may be accelerated further through the use of the vector auxiliary registers that are not included in the above. By subdividing the real, imaginary and exponent parts of the registers using packing and unpacking instructions, it can be appreciated that sine, cosine, tangent, arcsine, arccosine, arctangent, conversions between floating-point, fixed-point and integer, other base logarithms, exponentials and powers as well as conversions to degrees and radians may be computed using this system in different configurations alongside simple bitwise operations. This allows for a succinct design when many complex-valued operations are required in beam forming applications such as wireless routing, positioning systems, radar as well as applications involving acoustics and ultrasonics, or a requirement for a single efficient block for computing a high density of mathematical operations.

A bizarre quirk of this design means that many arithmetic operations have complexities that differ significantly from traditional designs. For instance, complex-valued vector-by-scalar division is the only high-level operation achievable in one call of the method that is not a logarithm or exponential. In practically all traditional systems this is the most expensive operation to perform, which should lead to a simple approach to detecting an infringing implementation within an instruction set architecture.

XXII. <u>Conclusion</u>

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

Moreover, in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art. The term "coupled" as used herein is defined as connected, although not necessarily directly and not necessarily mechanically. A device or structure that is "configured" in a certain way is configured in at least that way but may also be configured in ways that are not listed.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment.

**Claims**

1. A system comprising:

   a hardware component having at least one input and at least one output;

wherein the hardware component implements a switchable complex-valued unit having a to-logarithm functionality and a to-exponential functionality;

wherein the at least one input and the at least one output are complex valued;

wherein shift-and-add processes corresponding to multiplications by a value $1+2^{-n}d_n$ are applied to values in the hardware component that effect a separable multiplication of: i) the at least one input; ii) (1+c); and *(1+di)*;

wherein "c" is a real value and "di" is an imaginary value,

**characterised in that**

$d_n$ is a selected from the group: 0, -1, +1, *-i, +i*, $-1-i+2^{-n}i$, $-1+i+2^{-n}i$, $+1+i+2^{-n}i$, $+1-i+2^{-n}i$.

2. A system comprising:

a hardware component having at least one input and at least one output;

wherein the hardware component implements a switchable complex-valued unit having a to-logarithm functionality and a to-exponential functionality;

wherein the at least one input and the at least one output are complex valued;

wherein shift-and-add processes corresponding to multiplications by a value $1+2^{-n}d_n$ are applied to values in the hardware component that effect a separable multiplication of: i) the at least one input; ii) (1+c); and *(1+di)*;

wherein "c" is a real value and "di" is an imaginary value,

**characterised in that** $d_n$ is selected from the group $-1-i+2^{-n}i$, $-1+i-2^{-n}i$, $1+i+2^{-n}i$, $+1-i+2^{-n}i$.

3. The system of claim 1 or 2, wherein a logarithm process implemented by the unit is an affine logarithm process; and wherein an exponential processes implemented by the unit are an affine exponential process.

4. The system of claim 3, wherein the relation:

$$\frac{2 \tan^{-1} 2^{-p}}{\pi} \approx \frac{1}{2}\log_2(1 + 2^{-p}),$$

is used to approximate a lookup value of an arctangent expression as an existing lookup value of a binary logarithm expression and a smaller delta table.

5. The system of claim 3, wherein an imaginary part of the input in the affine logarithm process is tested and, if less than -½ or greater than or equal to +½, rotated by 45 degrees prior to an iteration.

6. The system of claim 1 or 2, wherein the to-logarithm functionality conducts an iteration test on a value that is an existing value subtracted by +1.

7. The system of claim 1 or 2, wherein the to- exponential functionality conducts an iteration test on a value that is an existing value subtracted by +1.

8. The system of any preceding claim, wherein "c" is a non-zero value and "di" is a non-zero value.

**Patentansprüche**

1. System, umfassend:

eine Hardwarekomponente mit wenigstens einem Eingang und wenigstens einem Ausgang,

wobei die Hardwarekomponente eine umschaltbare komplexwertige Einheit mit einer Zu-Logarithmus-Funktionalität und einer Zu-Exponential-Funktionalität implementiert,

wobei der wenigstens eine Eingang und der wenigstens eine Ausgang komplexwertig sind,

wobei Schiebe- und Addier-Prozesse, die Multiplikationen mit einem Wert $1+2^{-n} d_n$ entsprechen, auf Werte in der Hardwarekomponente angewendet werden, die eine separierbare Multiplikation bewirken von: i) dem wenigstens einen Eingang, ii) (1+c) und (1+di),

wobei "c" ein realer Wert und "d*i*" ein imaginärer Wert ist,

**dadurch gekennzeichnet, dass**

$d_n$ ausgewählt ist aus der Gruppe: 0, -1, +1, *-i, +i*, $-1-i+2^{-n}i$, $-1+i+2^{-n}i$, $+1+i+2^{-n}i$, $+1-i+2^{-n}i$.

**2.** System, umfassend:

eine Hardwarekomponente mit wenigstens einem Eingang und wenigstens einem Ausgang,
wobei die Hardwarekomponente eine umschaltbare komplexwertige Einheit mit einer Zu-Logarithmus-Funktionalität und einer Zu-Exponential-Funktionalität implementiert,
wobei der wenigstens eine Eingang und der wenigstens eine Ausgang komplexwertig sind,
wobei Schiebe- und Addier-Prozesse, die Multiplikationen mit einem Wert $1+2^{-n}\,d_n$ entsprechen, auf Werte in der Hardwarekomponente angewendet werden, die eine separierbare Multiplikation bewirken von: i) dem wenigstens einen Eingang, ii) (1+c) und (1+di),
wobei "c" ein realer Wert und "d$i$" ein imaginärer Wert ist,
**dadurch gekennzeichnet, dass**
$d_n$ ausgewählt ist aus der Gruppe: $-1-i+2^{-n}i$, $-1+i-2^{-n}i$, $1+i+2^{-n}i$, $+1-i+2^{-n}i$.

**3.** System nach Anspruch 1 oder 2, wobei ein von der Einheit implementierter Logarithmusprozess ein affiner Logarithmusprozess ist und wobei ein von der Einheit implementierter Exponentialprozess ein affiner Exponentialprozess ist.

**4.** System nach Anspruch 3, wobei die Beziehung:

$$\frac{2\tan^{-1}2^{-p}}{\pi} \approx \frac{1}{2}\log_2(1+2^{-p})$$

verwendet wird, um einen Nachschlagewert eines Arkustangensausdrucks als vorhandenen Nachschlagewert eines binären Logarithmusausdrucks und einer kleineren Deltatabelle anzunähern.

**5.** System nach Anspruch 3, wobei ein Imaginärteil der Eingabe im affinen Logarithmusprozess getestet und, falls kleiner als -½ oder größer oder gleich +½, vor einer Iteration um 45 Grad gedreht wird.

**6.** System nach Anspruch 1 oder 2, wobei die Zu-Logarithmus-Funktionalität einen Iterationstest an einem Wert durchführt, der ein vorhandener Wert abzüglich +1 ist.

**7.** System nach Anspruch 1 oder 2, wobei die Zu-Exponential-Funktionalität einen Iterationstest an einem Wert durchführt, der ein vorhandener Wert abzüglich +1 ist.

**8.** System nach einem der vorhergehenden Ansprüche, wobei "c" ein Wert ungleich Null und "d$i$" ein Wert ungleich Null ist.

**Revendications**

**1.** Système comprenant :

un composant matériel ayant au moins une entrée et au moins une sortie ;
dans lequel le composant matériel implémente une unité à valeur complexe commutable ayant une fonctionnalité de transformation sous forme logarithmique et une fonctionnalité de transformation sous forme exponentielle ;
dans lequel la ou les entrées et la ou les sorties sont à valeur complexe ;
dans lequel des processus de décalage et d'addition correspondant à des multiplications par une valeur $1+2^{-n}\,d_n$ sont appliqués à des valeurs dans le composant matériel qui effectuent une multiplication séparable de : i) la ou les entrées ; ii) (1+c) ; et (1+d$i$) ;
dans lequel "c" est une valeur réelle et "di" est une valeur imaginaire, **caractérisé en ce que**
$d_n$ est choisi dans le groupe : $0$, $-1$, $+1$, $-i$, $+i$, $-1-i+2^{-n}i$, $-1+i2^{-n}i$, $+1+i+2^{-n}i$, $1-i+2^{-n}i$.

**2.** Système comprenant :

un composant matériel ayant au moins une entrée et au moins une sortie ;
dans lequel le composant matériel implémente une unité à valeur complexe commutable ayant une fonctionnalité de transformation sous forme logarithmique et une fonctionnalité de transformation sous forme exponentielle ;

dans lequel la ou les entrées et la ou les sorties sont à valeurs complexes ;

dans lequel des processus de décalage et d'addition correspondant à des multiplications par une valeur $1+2^{-n}d_n$ sont appliqués à des valeurs dans le composant matériel qui effectuent une multiplication séparable de : i) la ou les entrées ; ii) (1+c) ; et (1+d$i$) ;

dans lequel « c » est une valeur réelle et « d$i$ » est une valeur imaginaire, **caractérisé en ce que** $d_n$ est sélectionné dans le groupe $-1-i+2^{-n}i$, $-1+i-2^{-n}i$, $1+i+2^{-n}i$, $+1-i+2^{-n}i$.

3. Système selon la revendication 1 ou 2, dans lequel un processus de logarithme implémenté par l'unité est un processus de logarithme affine ; et dans lequel un processus exponentiel mis en œuvre par l'unité est un processus exponentiel affine.

4. Système selon la revendication 3, dans lequel la relation :

$$\frac{2\tan^{-1}2^{-p}}{\pi} \approx \frac{1}{2}\log_2(1+2^{-p}),$$

est utilisée pour approximer une valeur de recherche d'une expression d'arctangente en tant que valeur de recherche existante d'une expression de logarithme binaire et d'une table delta plus petite.

5. Système selon la revendication 3, dans lequel une partie imaginaire de l'entrée dans le processus de logarithme affine est testée et, si elle est inférieure à - ½ ou supérieure ou égale à + ½, elle subit une rotation de 45 degrés avant une itération.

6. Système selon la revendication 1 ou 2, dans lequel la fonctionnalité de transformation sous forme logarithmique effectue un test d'itération sur une valeur qui est une valeur existante soustraite par +1

7. Système selon la revendication 1 ou 2, dans lequel la fonctionnalité de transformation sous forme exponentielle effectue un test d'itération sur une valeur qui est une valeur existante soustraite par +1.

8. Système selon l'une quelconque des revendications précédentes, dans lequel « c » est une valeur non nulle et « d$i$ » est une valeur non nulle.

FIG. 1A

FIG. 1B

FIG. 2A

FIG. 2B

FIG. 3A

FIG. 3B

FIG. 4A

FIG. 4B